(19) Europäisches Patentamt
European Patent Office
Office européen des brevets

(11) EP 0 705 931 B1

(12) # EUROPÄISCHE PATENTSCHRIFT

(45) Veröffentlichungstag und Bekanntmachung des Hinweises auf die Patenterteilung:
**17.03.1999 Patentblatt 1999/11**

(51) Int Cl.[6]: **D04H 1/42**

(21) Anmeldenummer: **95112913.9**

(22) Anmeldetag: **17.08.1995**

(54) **Vliese aus Elektretfasermischungen mit verbesserter Ladungsstabilität, Verfahren zu ihrer Herstellung, und ihre Verwendung**

Nonwoven of mixed electret fibres with improved charge stability, method of production and its use

Non-tissé d'un mélange de fibres d'électret avec stabilisation de la charge améliorée, procédé pour sa production et son utilisation

(84) Benannte Vertragsstaaten:
**BE CH DE DK ES FR GB IE IT LI**

(30) Priorität: **30.08.1994 DE 9414040 U**

(43) Veröffentlichungstag der Anmeldung:
**10.04.1996 Patentblatt 1996/15**

(73) Patentinhaber: **HOECHST AKTIENGESELLSCHAFT
65929 Frankfurt am Main (DE)**

(72) Erfinder:
- **Dahringer, Jörg
D-86399 Bobingen (DE)**
- **Albers, Ernst-August, Dr.
D-86399 Bobingen (DE)**
- **Groh, Werner, Dr.
D-86830 Schwabmünchen (DE)**
- **Heyer, Achim
D-65795 Hattersheim (DE)**

(74) Vertreter: **Luderschmidt, Schüler & Partner GbR
Patentanwälte,
Postfach 3929
65029 Wiesbaden (DE)**

(56) Entgegenhaltungen:
**EP-A- 0 375 781** **EP-A- 0 615 007**
**DE-A- 3 509 857**

- **DATABASE WPI Section Ch, Week 9317 Derwent Publications Ltd., London, GB; Class A88, AN 93-136905 & JP-A-05 068 823 ( TORAY IND INC) , 23.März 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Vliese aus Mischungen von mindestens zwei Sorten von Elektretfasern, die eine erheblich verbesserte Ladungsstabilität und Ladungsausbildung aufweisen, deren Herstellung und ihre Verwendung zur Herstellung von Staubfiltern und Staubwischtüchern.

Elektretfasern im Sinne dieser Erfindung sind Fasern aus elektrisch nichtleitenden Materialien, die eine aufgebrachte elektrostatische Ladung über längere Zeit zu speichern vermögen.
Bisher sind Elektretfasern hauptsächlich im Zusammenhang mit dem Problem der Feinststaubfiltration beschrieben worden. (Z.B. von Biermann, "Evaluation of permanently charged elektrofibrous filters", 17. DOE Nuclear Air Cleaning Conference, Denver, USA, (1982)).
Die verschiedenen, bisher beschriebenen Filtermaterialien unterscheiden sich sowohl hinsichtlich der Materialien, aus denen die Fasern bestehen als auch bezüglich der Art und Weise wie die elektrostatische Ladung auf die Fasern aufgebracht wird.

Die elektrostatische Ladung kann durch verschiedene Methoden appliziert werden. So ist es möglich, Polymer-Folien auf beiden Seiten unterschiedlich elektrostatisch aufzuladen und anschließend zu spalten. Man erhält hierbei sog. Split-Film-Fasern, die in der Regel als Faservlies abgelegt werden.
Weiterhin ist es bekannt, in ein starkes elektrostatisches Feld hineinzuspinnen oder die ersponnenen Fasern oder Fasererzeugnisse, z.B. Vliese, einer elektrischen Coronaentladung, z.B. zwischen hochgespannten Spitzen oder Drähten und geerdeten Flächenelektroden, auszusetzen.
Besonders vorteilhaft ist die Aufladung durch triboelektrische Effekte, d.h.
Ladungstrennung durch Reibung der Fasermaterialien mit anderen Medien, z.B. anderen Polymermaterialien, Festkörpern wie Metallflächen oder auch flüssigen oder gasförmigen Medien.

Verschiedene Faserrohstoffe wurden bisher untersucht und empfohlen um Elektretfasern mit vorteilhaften Elektreteigenschaften, wie langdauernder Ladungsstabilität, Feuchtigkeits- und Chemikalienresistenz herzustellen. Diese vorteilhaften Eigenschaften sollen auch bei möglichst geringen Kosten zu erzielen sein. Dabei haben sich Fluorpolymere wie Polytetrafluorethylen oder perfluorierte Ethylen/Propylen-Copolymere als sehr gute Elektretwerkstoffe erwiesen, die hohe Ladungsstabilität, charakterisiert durch eine Ladungs-Halbwertszeit (Ladungs-Lebensdauer) von Jahren bis Jahrzehnten, mit guter Temperaturstabilität und geringer Feuchtigkeitsaufnahme vereinen.
Gravierende Nachteile dieser Polymere, wie ihr hoher Preis und die großen Schwierigkeiten ihrer Verarbeitung, haben jedoch ihren Einsatz weitgehend verhindert.

Gute Resistenz gegen Chemikalien und Feuchtigkeit haben auch Elektretfasern aus Polyolefinen, wie Polyethylen und Polypropylen, oder aus Polycarbonaten. Handelsübliche Feinststaubfilter bestehen aus diesen Elektretmaterialien. Ein gravierender Nachteil dieser Fasern ist die relativ geringe Ladungs-Halbwertszeit die nur in der Größenordnung von etwa einem Jahr liegt. Dies ist in der Regel ein zu geringer Zeitraum, wenn man bedenkt, daß z.B. beim Einsatz der Fasern für die Filterherstellung die Zeit von der Faserherstellung bis zur Ingebrauchnahme des Filters plus der Filter-Lebensdauer leicht über einem Jahr liegen kann.

Schon solange Elektretfasern zur Herstellung von Feinststaubfiltern empfohlen und benutzt wurden, bestand daher ein stetiges dringendes Bedürfnis, Faserwerkstoffe zu finden, die Preiswürdigkeit mit deutlich verbesserter Ladungsstabilität, Resistenz gegen Feuchtigkeit und Chemikalien, sowie gute textiltechnische und mechanische Eigenschaften in sich vereinen und es sind auch bereits Vorschläge hierzu bekannt geworden.

In der US-Patentschrift 4,789,504 wird empfohlen, die Effektivität von Polypropylen-Elektretfiltern dadurch zu steigern, daß dem Polymermaterial ein Fettsäure-Salz zugesetzt wird.
Aus Journal of Electrostatics, 24 (1990) S. 283-293 ist es bekannt, daß die Temperatur, bei der unter standardisierten Meßbedingungen die Ladungsdichte eines Polyacrylat-Elektrets auf die Hälfte sinkt, von 126 auf 180 °C steigt, wenn dem Polymer ca. 10 Gew.-% Titandioxid zugesetzt wird. Dieser Zusatz hat jedoch neben einer Verschlechterung mechanischer Eigenschaften eine erhöhte Feuchtigkeitsempfindlichkeit zur Folge, die einem Einsatz in Filtermaterialien entgegensteht.

In der Europäischen Patentanmeldung Nr. 94 103 273.2 ist auch bereits vorgeschlagen worden, Vliese und Staubfilter aus Fasern herzustellen, die aufgrund eines Gehaltes an Ladungssteuermitteln ausgezeichnete textile Eigenschaften und eine erheblich verlängerte Halbwertszeit der elektrischen Ladung, d.h. eine erheblich verbesserte Ladungsstabilität, aufweisen.
Die dort eingesetzten Elektretfasern mit verbesserter Ladungsstabilität bestehen aus einem Werkstoff, der überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthält.
Diese Vliesstoffe können naturgemäß mit besonderem Vorteil zur Herstellung gut wirksamer und langlebiger Staubfilter eingesetzt werden.

Es wurde nun überraschenderweise gefunden, daß es gelingt, die Ladungsstabilität und Ladungsausbildung

von Elektretfaser-Vliesen weiter deutlich zu verbessern und/oder ohne Einbuße an Filterwirksamkeit zu verbilligen, wenn das Elektretfaser-Vlies eine Mischung von mindestens zwei Sorten von Elektretfasern enthält, die aus unterschiedlichen Werkstoffen bestehen.

Ein Gegenstand der vorliegenden Erfindung ist somit ein Vliesstoff aus Elektretfasern mit verbesserter Ladungsstabilität und Ladungsausbildung, bestehend aus Werkstoffen, die überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthalten, der dadurch gekennzeichnet ist, daß der Vliesstoff mindestens zwei Sorten von Elektretfasern enthält, die aus unterschiedlichen Werkstoffen bestehen.

Vorzugsweise enthält der erfindungsgemäße Vliesstoff zwei oder drei Sorten, insbesondere zwei Sorten, von Elektretfasern, die aus unterschiedlichen Werkstoffen bestehen.

Die Anteile der einzelnen Elektretfasersorten der Elektretfaser-Mischung können im Bereich von 10 bis 90 Gew.-%, vorzugsweise von 25 bis 75 Gew.-%, insbesondere von 33 1/3 bis 66 2/3 Gew.-%, - jeweils bezogen auf den Gesamtanteil an Elektretfasern in dem erfindungsgemäßen Vliesstoff - liegen.

Enthält beispielsweise ein erfindungsgemäßer Vliesstoff insgesamt 80 Gew.-% Elektretfasern und 20 Gew.-% Bindefasern, dann kann der Anteil der einzelnen Elektretfasersorten an der gesamten Fasermasse des Vliesstoffs im Bereich von 0,8∗10 bis 0,8∗90 Gew.-% (= 10 bis 90 Gew.-% von 80 Gew.-%) liegen.

Besonders bevorzugt sind solche Mischungen, in denen die Anteile der einzelnen Elektretfasersorten am Gesamtanteil der Elektretfasern im erfindungsgemäßen Vliesstoff etwa gleich groß sind, mit einer Abweichung von + 10 bis -10 Prozentpunkten, wobei natürlich die Summe der Elektretfaseranteile 100 Gew.-% betragen muß.

Beispielsweise kann ein bevorzugter erfindungsgemäßer Vliesstoff, der ausschließlich aus Elektretfasern besteht, und der drei Sorten von Elektretfasern enthält, 33.33 ± 10 Gew.-% (d.h. 23,33 bis 43,33 Gew.-%) jeder der drei Sorten von Elektretfasern aufweisen, wobei, wie oben bereits gesagt, die Summe der Elektretfaseranteile 100 Gew.-% betragen muß.

Enthält ein erfindungsgemäßer Vliesstoff außer der Elektretfaser-Mischung Nicht-Elektretfasern, noch so beziehen sich die angegebenen %-Anteile natürlich auf den Gesamtanteil an Elektretfasern im erfindungsgemäßen Vliesstoff.

Enthält ein solcher Vliesstoff z.B. 20 Gew.-% Bindefasern, und insgesamt 80 Gew.-% Elektretfasern der Sorten A, B und C, so könnte er beispielsweise folgende Zusammensetzung aufweisen:

| | |
|---|---|
| Anteil Elektretfaser A: | 18,66 Gew.-% (= 0,8∗(33,33-10)) |
| Anteil Elektretfaser B: | 26,66 Gew.-% (= 0,8∗33,33)) |
| Anteil Elektretfaser C: | 34,66 Gew.-% (= 0,8∗(33,33+10)) |
| Gesamt-Elektretfaser-Anteil: | 79,98 Gew.-% |
| + Bindefaser-Anteil: | 20,00 Gew.-% |
| Summe | 99,98 Gew.-% |

Die unterschiedlichen Werkstoffe können sich dadurch unterscheiden, daß sie unterschiedliche fadenbildende Polymerisate oder Polykondensate enthalten.

Bevorzugt ist es dabei, daß die unterschiedlichen fadenbildenden Polymerisate oder Polykondensate sich bezüglich ihrer Dielektrizitätszahl unterscheiden, wobei in der Regel eine umso größere Verbesserung der Ladungsstabilität und insbesondere der Ladungsausbildung erzielt wird, je größer der Unterschied der Dielektrizitätszahlen der Polymerisate oder Polykondensate der im Vliesstoff miteinander kombinierten Elektretfasern ist.

Die unterschiedlichen Werkstoffe enthalten unterschiedliche Polymerisate oder Polykondensate, die ausgewählt sind aus der Gruppe der Polyolefine, der halogenierten Polyolefine, der Polyacrylate, Polyacrylnitril, Polystyrol und Fluorpolymeren oder aus der Gruppe der Polyester, Polycarbonate, aliphatischen oder aromatischen Polyamide, Polyimide, Polyetherketone (z.B. PEK und PEEK), Polyarylensulfide insbesondere Polyphenylensulfid, Polyacetale und Zelluloseester. Weitere Details zu den in den Faserwerkstoffen enthaltenen Polymerisaten und Polykondensaten werden weiter unten bei der Beschreibung der zur Herstellung der erfindungsgemäßen Vliesstoffe eingesetzten Fasermaterialien und Werkstoffe angegeben.

Die unterschiedlichen Werkstoffe können sich auch dadurch unterscheiden, daß sie unterschiedliche fadenbildende Polymerisate oder Polykondensate und unterschiedliche organische oder metallorganische Ladungssteuermittel enthalten.

Die in den unterschiedlichen Werkstoffen enthaltenen organischen oder metallorganischen Ladungssteuermittel sind ausgewählt aus der Gruppe der Triphenylmethane; Ammonium- und Immoniumverbindungen; fluorierte Ammonium- und Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; Metallkomplexverbindungen; Benzimidazolone; oder Azine, Thiazine oder Oxazine, die im Colour Index als Pigments, Solvent Dyes, Basic Dyes oder Acid Dyes aufgeführt sind.

Weitere Details zu den in den Faserwerkstoffen enthaltenen Ladungssteuermitteln werden weiter unten bei der Beschreibung der zur Herstellung der erfindungsgemäßen Vliesstoffe eingesetzten Fasermaterialien und Werkstoffe angegeben.

Der Anteil der zwei oder mehreren Sorten von Elektretfasern im erfindungsgemäßen Vliesstoff, der diesem die gewünschte Eigenschaftskombination, insbesondere die weitere Verbesserung der elektrostatischen Eigenschaften und damit - bei Einsatz des Vliesstoffes als Staubfilter der verbesserten Filterwirksamkeit -vermittelt, kann u.U. überraschend klein sein.

Oft ergibt sich ein merklicher wirtschaftlicher und technischer Vorteil bereits bei einem erfindungsgemäßen Vliesstoff, der nur 10 % Elektretfasermischung enthält.

In der Regel ist es zweckmäßig, einen erfindungsgemäßen Vliesstoff einzusetzen, der 50 - 100 % Elektretfasern enthält, wobei die höchsten technischen Anforderungsprofile naturgemäß mit erfindungsgemäßen Vliesstoffen erfüllt werden können, die zu 75-100 % aus einer Elektretfasermischung bestehen.

Fasern im Sinne der vorliegenden Erfindung sind synthetische Endlosfasern (Filamente) oder Stapelfasern, zweckmäßigerweise mit Stapellängen von 0,2 bis 200 mm, vorzugsweise mit Stapellängen von 0,5 bis 50 mm, aber auch Pulpe, Spaltfasern oder Split-Film-Fasern, die auch in speziellen Ausführungsformen für spezielle Anwendungszwecke vorliegen können.

Die Titer der Synthesefasern der erfindungsgemäßen Vliesstoffe und der ggf. daraus hergestellten Erzeugnisse, insbesondere der Staubfilter, liegen in dem für diese Anwendungen üblichen Bereich.

Zweckmäßigerweise haben die in erfindungsgemäßen Vliesstoffen enthaltenen mindestens zwei Sorten von Elektretfasern Titer im Bereich von 0,02 bis 20 dtex. Für den Fall der "Split-Film-Fasern" kommt ein durchschnittlicher Titer von 0,02 bis 30 dtex in Betracht, mit geringen Anteilen gröberer und feinerer Fasern.

Fasern mit einem Titer von 0,02 bis 1 dtex, insbesondere von 0,02 bis 0,5 dtex werden vorzugsweise durch die "splitting" Technik (nicht zu verwechseln mit der Split-Film-Technik) hergestellt. Dabei werden Bikomponentenfasern, die aus Elektretwerkstoff und einem in einem Lösungsmittel löslichen Werkstoff mit "Island in the Sea" - Querschnitte hergestellt werden und wobei der Elektretwerkstoff die Inseln bildet, mit dem betreffenden Lösungsmittel behandelt. Dabei lösen sich die löslichen Anteile der Bikomponentenfaser auf und es werden die außerordentlich feinen Inselfasern erhalten.

Bevorzugt sind auch erfindungsgemäße Vliese aus Fasern mit besonders großer Oberfläche, d.h. feine Titer z.B. unter 3 dtex, insbesondere unter 2 dtex, oder multilobale Profilfasern z.B. mehrkantige oder sternförmige Profile oder beispielsweise Bändchen- oder Hantelprofile.

Von Fall zu Fall kann es zweckmäßig sein, Mischtiter einzusetzen, insbesondere können bei solchen Vliesstoffen, die nicht zu 100 % aus Elektretfasern bestehen, Elektretfasern und Normalfasern verschiedene Titer haben.

Die in erfindungsgemäßen Vliesstoffen enthaltenen mindestens zwei Sorten von Elektretfasern sind weiterhin dadurch gekennzeichnet, daß die Reißfestigkeit der Fasern 20 bis 80, vorzugsweise 30 bis 65 cN/tex,

die Reißdehnung 10 bis 200 %, vorzugsweise 10 bis 60 %, insbesondere 20 bis 50 %, der Hitzeschrumpf, gemessen bei 200 °C trocken ($S_{200}$) 0 bis 50 %, vorzugsweise < 10 % beträgt.

Die textiltechnischen Daten Reißfestigkeit, Dehnung und Hitzeschrumpf werden in üblicher Weise bei der Herstellung durch Einstellung der Spinngeschwindigkeit, der Verstreckung und der Fixierbedingungen bedarfsgerecht gesteuert.

Reißfestigkeiten von 20-30 cN/tex werden für Spezialanwendungen interessant, wo es darauf ankommt, daß die Fasern bei bestimmten Belastungen reißen können. Der übliche textile Anwendungsbereich erfordert Festigkeiten von ca 30-60 cN/tex. Technische Fasermaterialien dagegen müssen hohe Festigkeiten im Bereich bis etwa 80 cN/tex aufweisen.

Auch die Dehnung wird anwendungsspezifisch eingestellt. Für technische, hochfeste Garne werden geringe Dehnungen von etwa 10-15 % gefordert, normale textile Anwendungen sind auf Fasermaterialien mit einer Dehnung von ca. 20-40% eingestellt, für spezielle Anwendungen, z.B. zur Herstellung dreidimensional verformbarer textiler Flächengebilde, sind Garne mit möglichst hoher Dehnbarkeit, beispielsweise bis zu 200%, erwünscht.

Der Schrumpf der Fasermaterialien wird für übliche textile Anwendungen auf Werte unter 10 % eingestellt, für die Herstellung von Stapelfaservliesen z.B. auf < 5%. Es können jedoch auch ausgesprochene Hochschrumpf-Fasern für spezielle Anwendungen, z.B. zur Verdichtung oder Kräuseln von textilen Flächengebilden von Interesse sein.

Die in erfindungsgemäßen Vliesstoffen enthaltenen mindestens zwei Sorten von Elektretfasern können einen Präparationsauftrag von 0 bis 0,3 Gew.-%, vorzugsweise 0 bis 0,15 Gew.%, aufweisen. Eine bevorzugte Ausführungsform präparierter erfindungsgemäßer Elektretfasern besteht darin, daß sie eine hydrophobe Präparation aufweisen, insbesondere eine solche, die als hydrophobierendes Agenz Wachs, ein Fluortensid und/oder ein Fluorpolymer wie z. B. Polytetrafluorethylen, enthält.

Die in erfindungsgemäßen Vliesstoffen enthaltenen mindestens zwei Sorten von Elektretfasern können selbstverständlich auch in Kombination mit einem Nichtelektret-Material als Zweikomponentenfasern vorliegen.

Dabei können sie in den erfindungsgemäßen Vliesstoffen beispielsweise als Bikomponentenfaser mit Kern/Mantel-Struktur mit einem Kern aus Elektretwerkstoff der im Anspruch 1 angegebenen Zusammensetzung und einem Mantel aus niedriger schmelzendem Polymermaterial vorliegen.
Derartige Fasern können mit besonderem Vorteil zur Herstellung von erfindungsgemäßen Endlos- oder Stapelfaservliesen, die durch Erwärmen gebondet werden können, eingesetzt werden.

Die in erfindungsgemäßen Vliesstoffen enthaltenen mindestens zwei Sorten von Elektretfasern können auch als Bikomponentenfaser mit Kern/Mantel-Struktur mit einem Kern aus Normalfaser-Werkstoff, d.h. einem beliebigen spinnfähigen Polymermaterial, und einem Mantel aus Elektretwerkstoff der oben angegebenen Zusammensetzung vorliegen.

Die Elektretfasern können auch mit anderen Fasermaterialien, z.B. mit Effektgarnen oder Schmelzfasern gemeinsam zu erfindungsgemäßen Vliesstoffen verarbeitet werden.

Niedrig- oder teilorientierte Elektretfasern, d.h. solche die nur wenig oder garnicht verstreckt wurden, können wie Normalfasern als Schmelzklebefaser zur Verfestigung der Vliese eingesetzt werden; Hochschrumpf-Elektretfasern können zur Verdichtung und Verfestigung der Vliese eingesetzt werden.
Mehrkomponenten-Elektretfasern, können in Kern/Mantelanordnung oder auch in Seite an Seite-Anordnung vorliegen, wobei eine oder beide Komponenten aus Elektretfaserwerkstoffen bestehen.
Mehrkomponentenfasern und ihre Herstellung sind beschrieben z.B. in "Falkai, Synthesefasern", Seite 124 ff. insbes Abb 5.4.
Mehrkomponentenfasern mit einer Elektretkomponente können für besondere Zwecke eingesetzt werden, z.B. Seite an Seite -Fasern als selbstkräuselnde Fasern, wenn die Komponenten einen unterschiedliche Hitzeschrumpf haben; Kern/Mantel-Fasern als Klebefasern, wenn der Mantel einen relativ niedrigen Schmelzpunkt hat, oder bei entsprechender Querschnittsanordnung der Komponenten, z.B. in der Island/Sea-Anordnung, auch als Spaltfasern zur Herstellung besonders feiner Titer der Elektretfasern.

Erfindungsgemäße Vliesstoffe aus Endlosfasern liegen vorzugsweise in Form von Spunbonds vor; erfindungsgemäße Vliesstoffe aus Stapelfasern mit Stapellängen unter 20 mm werden zweckmäßigerweise durch Naßlegeverfahren erhalten und Vliesstoffe aus Stapelfasern mit Stapellängen über 20 mm liegen zweckmäßigerweise als Krempelvliesstoffe vor.
Technisch interessant sind auch Vliesstoffe, die sowohl Endlos- als auch Stapelfasern enthalten.
So läßt sich z.B. in vielen Fällen die gewünschte Eigenschaftskombination eines Filamentvliesstoffes (ein solcher besteht aus Endlosfilamenten) durch Einmischen eines geeigneten Anteils von Elektret-Stapelfasern einstellen.

Weiterhin kann es - wie bereit oben angegeben - zweckmäßig sein, Vliese herzustellen aus Mischungen von zwei oder mehreren Sorten erfindungsgemäßen Elektretfasern, wobei jede Sorte ein anderes der oben genannten Polymere und zusätzlich ein anderes der oben genannten Ladungssteuermittel enthält.

Selbstverständlich können auch Mischungen von Elektret-Stapelfasern und normalen Stapelfasern zu einem Spinnfaservlies in Wirrlage abgelegt werden.

Diese Ablage kann, wie üblich, durch trockenes oder nasses Ablegen erfolgen. Das Trockenlegen der Stapelfasern erfolgt in der Regel auf der Krempel, die Ablage von Endlosfasern nach dem Spunbondverfahren unmittelbar nach dem Ausspinnen. Dabei können die ersponnenen Filamente noch einen Streckschacht durchlaufen, in dem sie verstreckt werden und auf eine für die Ablage auf dem laufenden Sieb vorteilhafte Geschwindigheit beschleunigt werden.
Eine Verfestigung der Spunbonds erfolgt in der Regel durch eine Kalanderpassage der frisch abgelegten Filamentmasse.

Bevorzugt sind erfindungsgemäße Vliesstoffe, die verfestigt sind.

Die Verfestigung der erfindungsgemäßen Vliesstoffe kann prinzipiell in jeder bekannten Weise erfolgen. So ist es beispielsweise möglich, das Vlies durch einen Binder zu verfestigen mit dem das Vlies imprägniert wird und der anschließend ausgehärtet wird oder der Binder kann ein Schmelzbinder sein, der z.B. in Pulverform oder in Form von Binderfäden in das Vlies eingearbeitet wird, und der das Vlies unter Wärmeeinwirkung zum Vliesstoff verfestigt.
Die Verfestigung des Vlieses zum Vliesstoff kann auch durch Kalandrierung erfolgen, wobei teils eine mechanische Verfilzung der Filamente, teils eine autogene Verschweißung an den Kreuzungspunkten eintritt.
Das Schmelzkleber-Material kann selbstverständlich auch als eine Komponente einer Seite-an-Seite Bikomponentenfaser oder als Mantel einer Kern-Mantel-Bikomponentenfaser in das Vlies eingebracht werden.
Als vorteilhaft haben sich auch erfindungsgemäße Vliesstoffe erwiesen, die mechanisch verfestigt worden ist. Unter einer mechanischen Verfestigung ist zum Beispiel das Nadeln zu verstehen oder auch z.B. hydromechanische Verfestigung, wie sie z.B. in der EP-A-0 108 621 beschrieben ist.
Eine Kombination der verschiedenen Verfestigungsarten kann nach Bedarf ebenfalls erfolgen.

Das Flächengewicht der erfindungsgemäßen Vliesstoffe richtet sich natürlich nach dem geplanten Einsatz. In der Regel liegt es bei 5 bis 300 g/$m^2$, vorzugsweise bei 100 bis 250 g/$m^2$, kann aber für besondere Aufgaben auch darüber z.B. bei bis zu 1000 g/$m^2$ liegen.

Weitere bevorzugte Ausführungsformen des erfindungsgemäßen Vliesstoffs sind ein Spunbond, insbesondere ein durch Nadeln oder Schmelzkleber verfestigtes Spunbond oder auch ein trocken oder nassgelegter durch Schmelzkleber verfestigter Stapelfaservliesstoff.

Gegebenenfalls kann der Vliesstoff auch mit einem anderen Textilmaterial z.B. einem weiteren Vliesstoff oder einem Textilmaterial definierter Garnlage, das ebenfalls aus Elektretfasern bestehen oder solche enthalten kann, kombiniert werden.

Insbesondere ist gelegentlich die Kombination mit stützenden und verstärkenden oder auch schützend abdeckenden Textilmaterialien erwünscht. In einer bevorzugten Ausführungsform werden die erfindungsgemäßen elektretfaserhaltigen Vliese ein- oder insbesondere beidseitig mit einem schützenden Textilmaterial, z.B. einem Vliesstoff, insbesondere einem Feinvlies abgedeckt.

Insbesondere beim Einsatz der erfindungsgemäßen Vliese als Staubfilter ist oft die Kombination mit Grob- oder Tiefenfiltern zweckmäßig.

Die vorliegende Erfindung betrifft auch ein Verfahren zur Herstellung der erfindungsgemäßen Vliesstoffe durch Wirrablage von synthetischen Endlos- oder Stapelfasern in an sich bekannter Weise (Vergl.: "Radko Krcema, Handbuch der Textilverbundstoffe", Deutscher Fachverlag GmbH (1970), Seite 53) auf einer bewegten Unterlage, oder durch Vliesbildung aus Stapelfasern auf der Krempel oder Karde, anschließende Verfestigung, das dadurch gekennzeichnet ist, daß zumindest ein Teil der abgelegten Synthesefasern Elektretfasern sind.

Bei der Herstellung von Spinnfaservliesstoffen, die erfindungsgemäß einen Anteil von mindestens zwei Sorten von Elektretfasern enthalten, kann eine Mischung von mindestens zwei Sorten von Elektretfasern und normalen Stapelfasern im gewünschten Mischungsverhältnis in an sich bekannter Weise trocken oder nach einem Naßlegeverfahren zum Vlies abgelegt und anschließend verfestigt werden.

Es ist aber auch möglich, Vliesstoffe aus endlosen Fasern und Stapelfasern zu erzeugen, indem man bei der Ablage der Endlosfasern eine Beimischung der Stapelfasern vorsieht. In diesem Fall können wahlweise die Endlosfasern oder die Stapelfasern ganz oder teilweise aus mindestens zwei Sorten von Elektretfasern bestehen.

Auch bei der Herstellung der Vliesstoffe nach dem Spunbondprozess ist es möglich, Normalfasern und mindestens zwei Sorten von Elektretfasern bei der Ablage zu mischen. Hierzu können beispielsweise die Elektretfasern gesondert hergestellt werden und aus Faserreservoirs, z.B. Spulengestellen, abgezogen und durch Blasdüsen in den auf die Ablage gerichteten Faserstrom der Normalfasern eingespeist werden, oder die Spinnbalken, die zur Erzeugung der Vliesfilamente dienen, können neben Spinnöffnungen für Normalfasern auch Spinnöffnungen für Elektretfasern aufweisen, wobei das Verhältnis der verschiedenen Spinnöffnungen und die Menge der daraus ersponnenen Filamente dem angestrebten Verhältnis von Normal- und Elektretfasern im Vliesstoff entspricht.

In der Regel werden zur Herstellung erfindungsgemäßer Vliesstoffe insgesamt mindestens 10 Gew.-% Elektretfasern abgelegt oder eine Fasermischung, die mindestens 10 Gew.-% Elektretfasern enthält auf der Krempel oder Karde zum Vlies verarbeitet.

Vorzugsweise beträgt der Gesamtanteil der abgelegten Elektretfasern 50 bis 100%, und zur Erzielung der maximalen Effekte sind 75 bis 100 % der abgelegten Fasern Elektretfasern.

Die Verfestigung des Vlieses zum Vliesstoff erfolgt in an sich bekannter Weise unter Einsatz eines Binders, oder eines Schmelzbinders oder durch Kalandrieren oder, vorzugsweise, auf mechanischem Wege. Es ist jedoch auch möglich, verschiedene dieser Verfestigungsverfahren miteinander zu kombinieren.

Binder können z. B. Polymerlösungen oder -Dispersionen oder Latices sein, die auf das Vlies durch Imprägnieren oder Aufsprühen appliziert werden und die nach dem Verdampfen flüssigen Phase an den Kreuzungspunkten der Filamente "Bindesegel" ausbilden.

Es können aber auch Duroplastbinder eingesetzt werden, die, ggf. bei einer Wärmebehandlung, aushärten und die Faserkreuzungspunkte fixieren. Auch Schmelzbinder, die z.B. in Form von Pulvern oder vorzugsweise in Form von Binderfasern dem Vlies einverleibt werden, und die beim Erwärmen des Vlieses über ihren Schmelzpunkt an den Faserkreuzungspunkten zusammenlaufen und Bindepunkte ausbilden, die nach dem Wiederabkühlen das Vlies zum Vliesstoff verfestigen, können mit gutem Erfolg eingesetzt werden.

Eine ähnliche Verfestigung läßt sich durch das "autogene" Verschweißen der Vliesfilamente an ihren Kreuzungspunkten erzielen, wenn man das Vlies einer Kalandrierung in der Nähe der Schmelztemperatur der Vliesfilamente unterwirft.

Gute Ergebnisse ergibt auch eine mechanische Verfestigung z.B. durch Nadeln oder durch hydromechanische Verfestigung, wie sie beispielsweise in der EP-A-0 108 621 beschrieben ist. Hierbei tritt keinerlei chemische oder thermische Belastung des Filamentmaterials ein, sodaß die vorteilhaften physikalischen Eigenschaften die den Filamenten aufgrund ihrer Herstellung, z.B. durch Schnellspinnen und Verstreckoperationen vermittelt werden, ungeschmälert auf den Vliesstoff übertragen werden.

Zur Herstellung einer Kombination eines erfindungsgemäßen Vliesstoffs mit einem Textilmaterial definierter Garnlage ist der Vliesstoff mit diesem Textilmaterial so zu verbinden, daß keine Delaminierung eintreten kann. Diese Forderung läßt sich am besten erfüllen, wenn die Verbindung der Komponenten durch Nadeln, Kleben oder Nähen

erfolgt.
Besonders bevorzugt ist die Herstellung derartiger Verbundstoffe durch Schusslegerascheltechnik.
Hierbei handelt es sich um eine Kettwirktechnik, bei der der Vliesstoff richtungsorientiert durch Garne, vorzugsweise hochfeste Garne mit oder ohne Elektretfaseranteil oder aus Elektretfasern, verstärkt ist. Diese Kettwirktechnik wird auf sogenannten Raschelmaschinen durchgeführt. Eine besonders geeignete Raschelmaschine zur Herstellung eines erfindungsgemäß ausgebildeten Verbundstoffes ist die vom Typ RS 3 MSU-V der Firma Karl Mayer, Textilmaschinenfabrik GmbH, Obertshausen.

Aus herstellungstechnischen Gründen kann es vorteilhaft sein, die Fasern vor der Vliesbildung mit einer antistatischen Präparation zu versehen, die erst am Ende des Herstellprozesses, z.B. nach dem Konfektionieren der Filter, ausgewaschen wird. Es hat sich hierbei überraschenderweise gezeigt, daß in vielen Fällen bei der Herstellung der Vliese als Antistatikum eine ungwöhnlich stark verdünnte Präparation oder sogar nur Wasser eingesetzt werden kann. Diese Ausführungsform des Herstellungsprozesses ist besonders umweltverträglich.
Anschließend werden die Filter dann gezielt, z.B. in einer Coronaentladung, elektrostatisch aufgeladen.
Im übrigen hat es sich überraschenderweise gezeigt, daß bei der Herstellung der erfindungsgemäßen Vliese aus den mindestens zwei Sorten von Elektretfasern auf der Krempel oder bei ihrem Einsatz als Staubfilter, insbesondere als Feinstaubfilter, oder als Staubwischtücher aufgrund der Durchströmung mit Gasen oder Reibungsvorgänge durch triboelektrische Effekte in den meisten Fällen bereits eine ausreichende elektrische Aufladung der Vliese erfolgt, sodaß eine gesonderter Aufladungsschritt entfallen kann.

Gegenstand dieser Erfindung sind sowohl die elektrisch neutralen Vliesstoffe als auch die elektrostatisch geladenen. Dabei ist es unerheblich ob die Ladung gezielt aufgebracht wurde (z.B. durch Coronaentladung) oder spontan durch triboelektrische Effekte entstanden ist.

Gegenüber Vliesstoffen aus nur einer Sorte von Elektreffasern zeigen die erfindungsgemäßen Vliesstoffe aus Mischungen von Elektreffasern weiter verbesserte elektrische Eigenschaften. Diese ergeben sich offenbar im wesentlichen aus dem Zusammenwirken der mindestens zwei Sorten von Elektreffasern, d.h. aus den Unterschieden in der Zusammensetzung der mindestens zwei Werkstoffe, aus denen die mindestens zwei Sorten von Elektretfasern der erfindungsgemäßen Vliesstoffe bestehen, insbesondere aus dem Abstand der Polymerisate oder Polykondensate in der triboelektrischen Spannungsreihe - korrelierend mit den Unterschieden ihrer Dielektrizitätskonstanten - und ggf. der unterschiedlichen Stabilisierungswirkung der in den Werkstoffen enthaltenen Ladungsstabilisatoren.

Es wurde weiterhin überraschend festgestellt, daß es durch den Einsatz von Elektretfasermischungen in den erfindungsgemäßen Vliesen möglich ist, Elektretwerkstoffe aus Polymermaterialien, die durch den Zusatz von Ladungsstabilisatoren eine sehr erhebliche Verbesserung ihrer Elektreteigenschaften erfahren ohne Wirkungsverlust durch Elektretwerkstoffe aus Polymermaterialien zu ersetzen, die für sich allein bei Zusatz von Ladungsstabilisatoren nur eine geringe Verbesserung ihrer Elektreteigenschaften zeigen.
Dies ist besonders interessant in solchen Fällen, in denen
die Polymermaterialien, die eine große Verbesserung ihrer Elektreteigenschaften zeigen, komplizierter herzustellen und daher kostspieliger sind als die Polymermaterialien, die nur eine geringe Verbesserung zeigen.
Der Vergleich der Trenngrade (Filterwirksamkeit) der im Rahmen der Ausführungsbeispiele hergestellten Vliesstoffmuster 2 (erfindungsgemäß), Vliesstoffmuster 4 und Vliesstoffmuster 6 veranschaulicht diesen Vorteil.

Die erfindungsgemäßen Vliese, welche aus den mindestens zwei Sorten von Elektreffasern bestehen oder einen wirksamen Anteil an solchen enthalten, werden - wie bereits oben gesagt - mit besonderem Vorteil zur Herstellung von Staubfiltern (Feinstaubfiltern) und von Staubwischtüchern benutzt.
Ein Gegenstand der vorliegenden Erfindung sind daher auch diese Anwendungen der erfindungsgemäßen Vliesstoffe sowie die Staubfilter und Staubwischtücher, enthaltend einen, oder bestehend aus einem, erfindungsgemäßen Vliesstoff.

Während die weiter verbesserten elektrischen Eigenschaften der erfindungsgemäßen Vliesstoffe im wesentlichen auf dem Zusammenwirken der mindestens 2 Sorten von Elektretfasern und dem charakteristischem Elektretverhalten der zu ihrer Herstellung eingesetzten Werkstoffe beruhen, ergeben sich die anwendungstechnischen Vorzüge in ihrer Gesamtheit aus der vorteilhaften Kombination elektrischer und mechanischer und form- und verformungsbedingter Eigenschaften der aus diesen Werkstoffen bestehenden Elektreffasern.

Die Werkstoffe, aus denen die in den erfindungsgemäßen Vliesstoffen enthaltenen Fasern bestehen, zeichnet sich durch eine verbesserte Ladungsstabilität aus.
Diese findet ihren Ausdruck in einem deutlich verbesserten anwendungstechnischen Verhalten bei allen Anwendungen, bei denen das Vorhandensein einer elektrostatischen Aufladung der Fasern eine positive Rolle spielt, z.B. beim Einsatz der erfindungsgemäßen Vliesstoffe zur Herstellung von Staubfiltern und Staubwischtüchern. Die Verbesserung der Ladungsstabilität kommt nach unserer bisherigen Erkenntnis einerseits über eine Verbesserung der Ladungshaltung, d.h. der Aufrechterhaltung eines einmal hergestellten Ladungszustands der Fasern unter Anwendungsbedingungen, und andererseits über den Effekt der spontanen Ladungsbildung durch triboelektrische Effekte, die zu einem dynamischen Gleichgewicht der Aufladung führen, zustande.

In der Praxis dürften beide Effekte zusammenwirken, ggf. mit unterschiedlichen Anteilen, je nach dem, welches Polymermaterial im Faserwerkstoff überwiegend enthaltenen ist.
Der Effekt der verbesserten Ladungshaltung manifestiert sich darin, daß der Werkstoff, aus dem die erfindungsgemäßen Elektreffasern bestehen,

a) nach einer elektrischen Aufladung ein Maximum des Entladestromes bei einer Temperatur oberhalb 50 °C, vorzugsweise zwischen 100-250 °C, insbesondere zwischen 100 und 180°C aufweist, wobei die Entladestromkurve nach Durchlaufen des Maximums wieder einen ausgeprägten abfallenden Ast aufweist, und

b) bei 25 °C eine Halbwertszeit der elektrischen Ladung von mindestens 6 Monaten hat, wobei

c) seine Ladungs-Halbierungstemperatur oberhalb 100 °C, vorzugsweise zwischen 100-250 °C, insbesondere zwischen 100 und 180°C liegt und

d) nach einer Standard-Aufladung (einseitig geerdete Folie von 50 µm Stärke, 3 Min. einer Corona-Entladung ausgesetzt) eine Ladungsdichte von mindestens $1 \cdot 10^{-9}$ Coulomb/$cm^2$ aufweist.

Die Messung des Entladestromes des Werkstoffs erfolgt in der Weise, daß eine kreisförmige, in einem Halter eingespannte Probe einer aus dem Werkstoff hergestellten Folie einseitig mit einer Aluminiumschicht bedampft wird, mit der metallisierten Seite auf einen geerdeten Metallblock aufgelegt wird und von der freien Seite mit einer Coronaentladung 3 Min. aufgeladen wird. Danach wird die Probe abgekült und einige Std. bei Normaltemperatur konditioniert. Anschließend wird die Entladung der Elektretprobe mit Hilfe der "Air Gap Current TSC "-Methode (beschrieben in "Electrets", Editor G.M.Sessler, in "Topics in Applied Physics", 2. Auflage, (1987), Vol. 33, S.95 ff., Springer Verlag) bei einer Aufheizgeschwindigkeit von 2 °C/min. gemessen.
Während des Aufheizens wird kontinuierlich der Entladestrom gemessen und gegen die Temperatur aufgezeichnet. Charakteristisch für den Werkstoff ist, neben der Ladungsmenge, die Lage der Temperaturpeaks des Entladestroms und das Vorhandensein eines abfallendes Astes der Entladekurve hinter den Peaks.
Die Halbwertszeit der elektrischen Ladung ist der Zeitraum, innerhalb dessen die ursprünglich auf den Elektretwerkstoff aufgebrachte Ladung bei 25 °C auf die Hälfte abgesunken ist.
Unter der Ladungs-Halbierungstemperatur soll diejenige Temperatur verstanden werden, bei der, bei einer Aufheizgeschwindigkeit von 2 °C/min, die Ladungsdichte des Werkstoffs auf die Hälfte ihres bei 25 °C geltenden Wertes absinkt.
Viele erfindungsgemäß eingesetzte Elektreffasern zeigen überraschenderweise einen hohen triboelektrischen Effekt, d. h. sie neigen stark dazu, sich spontan durch Wechselwirkung miteinander und mit ihrer Umgebung aufzuladen. Dies führt dazu, daß die aus diesen Fasern bestehenden oder diese Fasern enthaltenden Staubfilter auch ohne gesonderte elektrische Aufladung (z.B. durch eine Corona-Entladung) bei der Durchströmung mit Gasen (z.B. im Gebrauch) oder durch Reibung der Fasern aneinander oder an andersartigen festen Materialien spontan eine erheblich höhere elektrostatische Aufladung und damit eine wesentlich bessere Partikelabscheidung erreicht, als ein gleich aufgebautes Staubfilter aus Normalfasern.
Besonders überraschend ist es, daß die signifikante Verbesserung des Abscheidegrades von Staubpartikeln sich auch dann ergibt wenn, beispielsweise in einer Entfernung von einigen Zentimetern vom Filtermaterial, gar kein elektrostatisches Feld messbar ist.
Die leicht unter Standardbedingungen meßbare relative Verbesserung $TR_{\%}$ in [%] des Abscheidegrades T (x) eines erfindungsgemäßn Vliestoffilters aus Elektretfasern gegenüber einem gleichen Filter aus Normalfasern stellt daher einen Parameter dar, der sehr gut zur Charakterisierung der Verbesserung der Ladungsstabiltät der in den erfindungsgemäßen Vliesstoffen enthaltenen Elektreffasern geeignet ist.
Zur Bestimmung des Faserparameters $TR_{\%}$ wird aus den zu untersuchenden erfindungsgemäßen Elektretfasern ein Vliesstoff hergestellt mit einem Flächengewicht von 100 ± 5 g/$m^2$, einem Fasertiter von 1,7 ± 0,2 dtex und einer Dichte entsprechend einer Druckdifferenz vor und hinter dem Filter von 8-12 Pa bei einer Anströmgeschwindigkeit von 20 cm/s, das aus 80 Gew.% der zu prüfenden Elektretfasern und 20 Gew.% Bikomponenten-Bindefasern besteht. Außerdem wird ein zweites, bezüglich Flächengewicht, Fadentiter und Dichte gleiches Vliesstoffilter hergestellt, das jedoch anstelle der zu untersuchenden Elektretfasern Normalfasern (d.h. Fasern aus dem gleichen Polymermaterial aber ohne Gehalt an Ladungssteuermittel) enthält.
Von beiden Filtern wird der Abscheidegrad für Staubpartikel mit einer mittleren Partikelgröße von 0,3 bis 0,5 µm gemessen.
Ist T(x) der Abscheidegrad des erfindungsgemäßen Filters, und T'(x) der des Vergleichsfilters,
so ist $T_E = \ln(1-T(x))$ und $T_V = \ln(1-T'(x))$ für x-Werte von 0,3 bis 0,5 µm, und $TR_{\%}$ ergibt sich aus der Formel

$$TR_{\%}\,[\%] = \frac{T_E * 100}{T_V} - 100$$

Die in den erfindungsgemäßen Vliesstoffen enthaltenen mindestens zwei Sorten von Elektretfasern haben einen $TR_{\%}$-Wert von mindestens 30%, vorzugsweise mindestens 50%, beispielsweise von 40 bis 60 % und/oder sie weisen die oben unter den Punkten a) bis d) angegebenen, die Ladungshaltung charakterisierenden Merkmale auf.

Für solche erfindungsgemäß eingesetzte Elektretfasern, die auf Basis eines Polymers mit geringer Ladungshaltung hergestellt werden, charakterisiert der $TR_{\%}$-Wert im wesentlichen den Beitrag des triboelektrischen Effekts zur Verbesserung der Ladungsstabilität der Elektretfasern gegenüber Normalfasern.

Die Verbesserung der Ladungsstabilität korreliert naturgemäß in gewissen Grenzen mit der Konzentration des Ladungsteuermittels in dem Werkstoff der erfindungsgemäßen Elektretfasern.

Die Konzentration wird so eingestellt, daß die Fasern gegenüber herkömmlichen eine ausreichende Verbesserung der elektrostatischen Eigenschaften bei gleichzeitigem Erhalt guter textiltechnischer und mechanischer Eigenschaften aufweisen.

Die Werkstoffe bestehen in der Regel überwiegend aus einem Polymerisat oder Polykondensat, können jedoch andere Polymere oder Monomere oder auch anorganische Zusatzstoffe enthalten, die üblicherweise in synthetischen Fasermaterialien zur Ausbildung spezieller Eigenschaften vorhanden sind. Als Beispiel seien nur die Mattierungsmittel genannt.

Als Polymere im Sinne dieser Erfindung sind nicht nur die durch Polymerisation erhaltenen hochmolekularen Verbindungen, wie z.B. Polyolefine, Polyacrylate, Polyacrylnitril u.dgl. anzusehen, sondern auch die durch Polykondensation herstellbaren, wie z.B. Polyester oder Polyamide u.s.w..

Die Polymerisate und Polykondensate, die in den erfindungsgemäß einzusetzenden Elektretwerkstoffen überwiegend enthalten sind, haben in der Regel intrinsische Viskositäten von 0,45 bis 1,2, vorzugweise 0,6 bis 0,9 dl/g, gemessen in Dichloressigsäure bei 25 °C und sind schmelzspinnbar oder lösungsspinnbar.

Aus Lösungen durch Nass- oder Trockenspinnverfahren verspinnbare Polymere gestatten den Einsatz von thermisch weniger stabilen Ladungssteuermitteln.

Vorzugsweise enthalten die Werkstoffe überwiegend ein fadenbildendes Polymerisat aus der Gruppe Polyethylen, Polypropylen, Polyacrylnitril, Polytetrafluorethylen und perfluoriertes Ethylen/Propylen-Copolymer, insbesondere aus der Gruppe Polyethylen und Polypropylen.

Bevorzugte Werkstoffe, die überwiegend ein fadenbildendes Polykondensat enthalten, basieren auf Polykondensaten aus der Gruppe der Polyester, insbesondere Polyalkylenterephthalat, wie z.B. Polyethylenterephthalat, oder auf Zelluloseestern, insbesondere Zellulose-2 1/2- und tri-azetat.

Erfindungsgemäße Vliesstoffe, die Elektretfasern aus aromatischen Polyamiden, Polyetherketonen (z.B. PEK und PEEK), und Polyarylensulfiden insbesondere Polyphenylensulfiden enthalten oder daraus bestehen, erfüllen insbesondere Forderungen nach erhöhter chemischer und/oder thermischer Beständigkeit.

Eine weitere bevorzugte Ausführungsform der Erfindung ist dadurch gekennzeichnet, daß der Werkstoff überwiegend ein fadenbildendes Polykondensat aus der Gruppe der Polyester, Polyetherketone und Polyphenylensulfid, insbesondere Polyalkylenterephthalat enthält.

Eine weitere bevorzugte Ausführungsform der Erfindung ist dadurch gekennzeichnet, daß der Werkstoff überwiegend Polypropylen enthält.

Erfindungsgemäße Polypropylen- und Polyester- Elektretfäden können unter dem Gesichtspunkt der Sortenreinheit (leichte Recyclisierbarkeit) mit besonderem Vorteil im Kraftfahrzeugbau eingesetzt werden.

Die mindestens zwei verschiedenen Werkstoffe der mindestens zwei Sorten von Elektretfasern der erfindungsgemäßen Vliesstoffe enthalten gleiche oder verschiedene Ladungssteuermittel, wie sie in Tonern für elektrophotographische Prozesse enthalten sind.

Ladungssteuermittel für elektrophotographische Prozesse sind in großer Zahl aus der Patentliteratur bekannt.

Demgemäß enthalten die Werkstoffe als Ladungssteuermittel eine oder verschiedene Verbindungen aus folgenden Klassen:

Triphenylmethane; Ammonium- und Immoniumverbindungen; fluorierte Ammonium-und Immoniumverbindungen; biskationische Säureamide; polymere Ammoniumverbindungen; Diallylammoniumverbindungen; Arylsulfide-Derivate; Phenolderivate; Phosphoniumverbindungen und fluorierte Phosphoniumverbindungen; Calix(n)arene; Metallkomplexverbindungen; Benzimidazolone; oder Azine, Thiazine oder Oxazine, die im Colour Index als Pigments, Solvent Dyes, Basic Dyes oder Acid Dyes aufgeführt sind.

Vorzugsweise sind die Ladungssteuermittel in dem Faserwerkstoff überwiegend in dispergierter Form enthalten. Das bedeutet, daß der Werkstoff vorzugsweise ein mehrphasiges System darstellt, in dem das Ladungssteuermittel eine feinteilige, feste Phase bildet, die in der kontinuierlichen Phase des fadenbildenden Polymerisats oder Polykondensats fein verteilt ist.

"Überwiegend" im Sinne dieser Erfindung bedeutet, daß ein gewisser, meist geringer Anteil des Ladungssteuermittels in dem fadenbildenden Polymerisat oder Polykondensat auch echt gelöst sein kann, d.h. in molekularer Verteilung vorliegt. Die Höhe dieses Anteils richtet sich naturgemäß nach der Löslichkeit des Ladungssteuermittels in dem Polymerisat bzw. Polykondensat.
Die Untergrenze der mittleren Teilchengröße der dispergierten Ladungssteuermittel kann an der Untergrenze kolloidaler Verteilung liegen, d.h. daß im Mittel zumindest eine Dimension der Teilchen eine Größe von etwa 1 nm aufweist. Die Obergrenze liegt in der Regel bei etwa 20 µm.
In besonderen Fällen, z.B. bei der Herstellung der Dispersionen durch Fällungsoperationen oder durch spezielle Kristallisations-oder Mahlprozesse, können die Ladungssteuermittel auch mittlere Teilchengrößen von unter 1 nm oder über 20 µm aufweisen.
Im Einzelfall wird die Teilchengröße der einzudispergierenden Ladungssteuermittel zweckmäßigerweise so eingestellt, daß sich die optimale Ladungsstabilisierung ergibt. Selbstverständlich ist auch die (Re-)Dispergierbarkeit (d.h. das Zerteilen von eventuell aus Primärteilchen und/oder Aggregaten gebildeten Agglomeraten), und die Homogenisierbarkeit der Dispersionen angemessen zu berücksichtigen.
In der Praxis haben sich für die in die erfindungsgemäßen Elektretfasern eindispergierten Ladungssteuermittel Teilchengrößen von 0,01 bis 10 µm, insbesondere 0,03 bis 1,0 µm bewährt.
Von besonderer Bedeutung für die anwendungstechnischen Eigenschaften der erfindungsgemäßen Elektretfasern ist auch die Stabilität der Dispersion der darin enthaltenen Ladungssteuermittel über längere Zeiträume und/oder unter belastenden Bedingungen.
Besonders vorteilhaft ist auch eine möglichst enge Teilchengröße-Verteilung der Ladungssteuermittel in den erfindungsgemäßen Elektretfasern.

Ladungssteuermittel, die einzeln oder in Kombination miteinander in den Elektretfasern der erfindungsgemäßen Vliesstoffe enthalten sind und diesen sehr gute elektrostatische Eigenschaften vermitteln sind:

1.
Triarylmethan-Derivate wie beispielweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum ganz besonders eignen Colour Index Solvent Blue 125, 66 und 124.
Besonders gut geeignet ist Colour Index Solvent Blue 124 in Form seines hochkristallinen Sulfats oder des Trichlortriphenymethyl-tetrachloraluminats.
Weitere Beispiele für zur Herstellung erfindungsgemäßer Elektretfasern gut geeignete Ladungssteuermittel der Triphenylmethan-Reihe sind die in der DE-PS 1 919 724 und der DE-PS 1 644 619 beschriebenen Verbindungen.
Weiterhin Triphenylmethane wie beschrieben in US-A-5 051 585, insbesondere solche der Formel 1

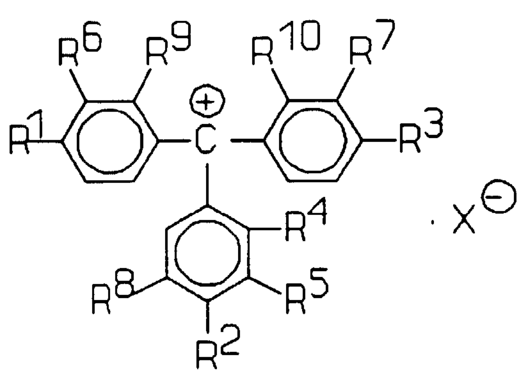

**(1)**

worin

$R^1$ und $R^3$ gleich oder verschieden sind und $-NH_2$, eine Mono- und Dialkylaminogruppe deren Alkylgruppen 1 - 4, vorzugsweise 1 oder 2, C-Atome haben, eine Mono- oder Di-omega-hydroxyalkylaminogruppe deren Alkylgruppen 2 - 4, vorzugsweise 2, C-Atome haben, eine ggf. N-Alkylsubstituierte Phenyl- oder Phenalkylaminogruppe deren Alkyl 1-4, vorzugsweise 1 oder 2 C-Atome hat, deren Phenalkylgruppe in der aliphatischen

Brücke 1 bis 4, vorzugsweise 1 oder 2 C-Atome hat und deren Phenylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,
$R^2$ Wasserstoff ist oder eine der für $R^1$ und $R^3$ genannten Bedeutungen hat,
$R^4$ Wasserstoff, Halogen, vorzugsweise Chlor, oder eine Sulfonsäuregruppe bedeutet oder mit $R^5$ zusammen einen ankondensierten Phenylring bildet,
$R^5$ mit $R^4$ zusammen einen ankondensierten Phenylring bildet,
$R^6$, $R^7$, $R^9$ und $R^{10}$ jeweils Wasserstoff oder einen Alkylrest mit 1 oder 2 C-Atomen, vorzugsweise Methyl bedeuten und
$R^8$ Wasserstoff oder Halogen, vorzugsweise Chlor, ist und
$X^-$ für ein Äquivalent eines Anions steht, insbesondere für ein Chlorid-, Sulfat-, Molybdat-, Phosphormolybdat- und Borat-Anion.

Besonders bevorzugt ist ein Ladungssteuermittel der Formel 1 worin $R^1$ und $R^3$ Phenylaminogruppen $R^2$ eine m-Methyl-phenylaminogruppe und die Reste $R^4$ bis $R^{10}$ alle Wasserstoff sind.

2.
Ammonium- und Immoniumverbindungen wie beschrieben in US-A-5 015 676.

3.
fluorierte Ammonium- und Immoniumverbindungen wie beschrieben in US-A-5 069 994, insbesondere solche der Formel 3

$$R^1-CF=CH-CH_2-\overset{R^2}{\underset{R^4}{N^{\oplus}}}-R^3 \cdot X^{\ominus} \quad (3)$$

worin

$R^1$ perfluoriertes Alkyl mit 5 - 11 C-Atomen,
$R^2$, $R^3$ und $R^4$ gleich oder verschieden sind und Alkyl mit 1 - 5, vorzugsweise 1 - 2 C-Atomen bedeuten,
$X^-$ ein Äquivalent eines Anions, vorzugsweise eine Tetrafluoborat- oder Tetra-Phenylborat-Anions ist.

Vorzugsweise bedeutet

$R^1$ perfluoriertes Alkyl mit 5 - 11 C-Atomen,
$R^2$ und $R^3$ Ethyl und
$R^4$ Methyl

4.
Biskationische Säureamide wie beschrieben in PCT-A-91/10172, insbesondere solche der Formel 4

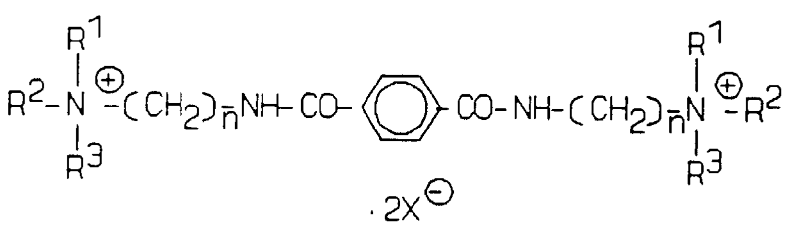

(4)

worin

$R^1$, $R^2$ und $R^3$ gleiche oder verschiedene Alkylreste mit 1 - 5 C-Atomen, vorzugsweise Methyl sind,
n für eine ganze Zahl von 2 bis 5 steht,
und $X^-$ für ein Äquivalent eines Anions steht, vorzugsweise für ein Tetraphenylborat-Anion.

5\.

Diallylammoniumverbindungen wie beschrieben in DE-A-4 142 541, insbesondere solche der Formel 5

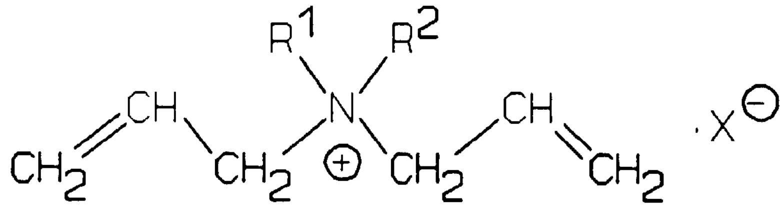

(5)

worin

$R^1$ und $R^2$ gleiche oder verschiedene Alkylgruppen mit 1-5, vorzugsweise 1 oder 2, C-Atomen, bedeuten, insbesondere aber für Methylgruppen stehen und $X^-$ für ein Äquivalent eines Anions steht, vorzugsweise für ein Tetraphenylborat-Anion steht, sowie

die aus diesen erhältlichen polymeren Ammoniumverbindungen der Formel 6 (wie beschrieben in DE-A-4 029 652 oder der DE-A-4 103 610),

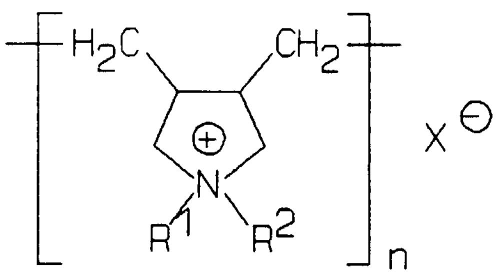

(6)

worin n einen Wert hat, der Molekulargewichten von 5000 bis 500000 entspricht. Besonders bevorzugt sind jedoch Verbindungen der Formel 6 mit Molekulargewichten von 40000 bis 400000.

6\.

Arylsulfide-Derivate wie beschrieben in DE-A-4 031 705, insbesondere solche der Formel 7

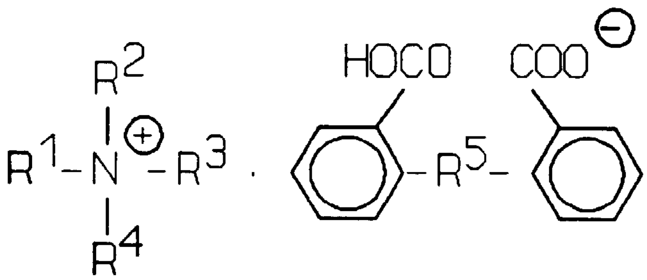

(7)

worin

$R^1$, $R^2$, $R^3$ und $R^4$ gleiche oder verschiedene Alkylgruppen mit 1-5, vorzugsweise 2 oder 3, C-Atomen, bedeuten und
$R^5$ einer der zweiwertigen Reste -S-, -S-S-,-SO- oder $-SO_2-$ ist.

Beispielsweise sind $R^1$ bis $R^4$ Propylgruppen und $R^5$ die Gruppe -S-S-.

7. Phenolderivate wie beschrieben in EP-A-0 258 651, insbesondere solche der Formel 8

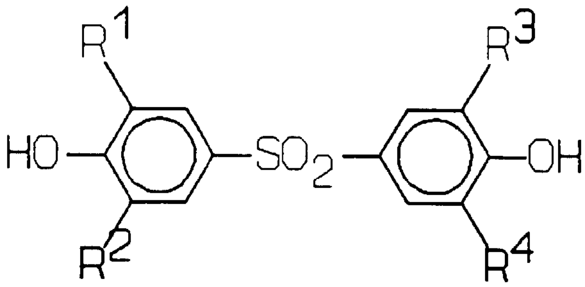

(8)

worin

$R^1$ und $R^3$ Alkyl- oder Alkenylgruppen mit 1 bis 5, vorzugsweise 1 bis 3 C-Atomen und
$R^2$ und $R^4$ Wasserstoff oder Alkyl mit 1 bis 3 C-Atomen, vorzugsweise Methyl bedeuten.

Als Beispiel seien genannt die Verbindungen in denen $R^1$ bis $R^4$ Methylgruppen sind oder in denen $R^2$ und $R^4$ Wasserstoff sind und $R^1$ und $R^3$ für die Gruppe $-CH_2-CH=CH_2$ stehen.

8. Phosphoniumverbindungen und fluorierte Phosphoniumverbindungen wie beschrieben in US-A-5 021 473 und in US-A-5 147 748, insbesondere solche der Formeln 9

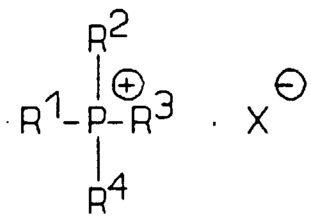

(9)

worin

$R^1$, $R^2$, $R^3$ und $R^4$ gleiche oder verschiedene Alkylgruppen mit 1-8, vorzugsweise 3 bis 6, C-Atomen, bedeuten und $X^-$ für ein Äquivalent eines Anions steht, vorzugsweise für ein Halogenid-Anion

und 10;

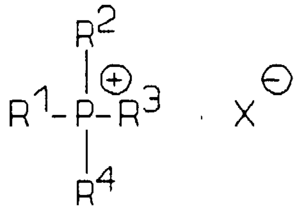

(10)

worin

$R^1$ ein hochfluorierter Alkylrest mit 5-15, vorzugsweise 6-10, C-Atomen,
$R^2$, $R^3$ und $R^4$ Alkyl mit 3-10 C-Atomen oder Phenyl und
$X^-$ für ein Äquivalent eines Anions steht.

Als Beispiel für eine Verbindung der Formel 9 sei genannt Tetrabutyl-phosphoniumbromid, als Beispiele für Verbindungen der Formel 10 seien genannt die Verbindungen mit $R^1 = C_8F_{17}-CH_2-CH_2-$, $R^2=R^3=R^4=$ Phenyl und $X^- = PF_6-$ oder das Tetraphenylborat-Anion.

9.

Calix(n)arene wie beschrieben in EP-A-0 385 580 und wie beschrieben in EP-A-0 516 434, insbesondere solche der Formel 11

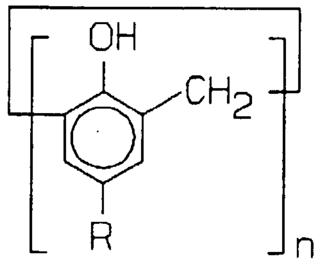

(11)

worin

R für Wasserstoff, Halogen, vorzugsweise Chlor, geradkettiges oder verzweigtes Alkyl mit 1-12 C-Atomen, Aralkyl, z.B. Benzyl oder Phenethyl, $-NO_2$, $-NH_2$, $-NHR^1$ oder $HR^1R^2$ steht, wobei $R^1$ Alkyl mit 1-8 C-Atomen, ggf. substituiertes Phenyl oder $-Si(CH_3)_3$ bedeuten.

10.

Metallkomplexverbindungen, wie Chrom-, Kobalt-, Eisen-, Zink- oder Aluminium-Azokomplexe oder Chrom-, Kobalt-, Eisen-, Zink- oder Aluminium-Salicylsäurekomplexe der Formeln 12, 13 und 14

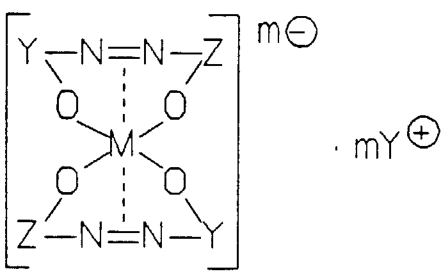

(12)

worin

M ein 2- oder 3-wertiges Metallatom, vorzugsweise Chrom, Kobalt, Eisen, Zink oder Aluminium bedeutet,
Y und Z für zweibindige aromatische Ringe, vorzugsweise der Formeln

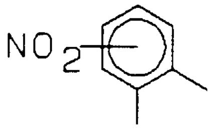 , 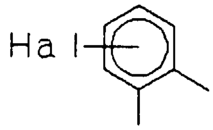 oder 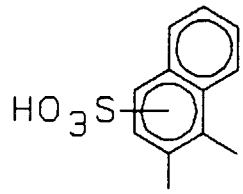

stehen, m eine der Zahlen 1 oder 2 ist und $K^+$ ein Äquivalent eines Kations ist,

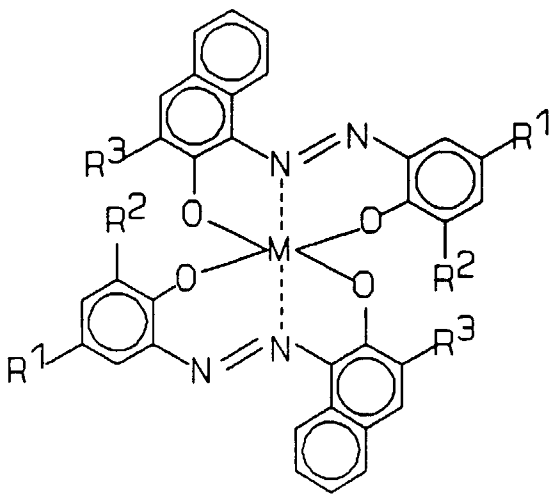 · Z (13)

worin
M ein 2- oder 3-wertiges Metallatom, vorzugsweise Chrom, Kobalt, Eisen,
$R^1$ Wasserstoff, Halogen, vorzugsweise Cl, Nitro oder Amidosulfonyl,
$R^2$ Wasserstoff oder Nitro,
$R^3$ Wasserstoff, die Sulfonsäuregruppe, -CO-NH-$R^4$ ist, wobei $R^4$ = Phenyl, Alkyl mit 1-5 C-Atomen, das ggf. durch eine Mono-, Di- oder Trialkylaminogruppe substituiert sein kann und
Z ein Gegenions ist, das die Neutralität des Komplexes herstellt, vorzugsweise ein Proton, ein Alkali- oder ein Ammonium-Ion,

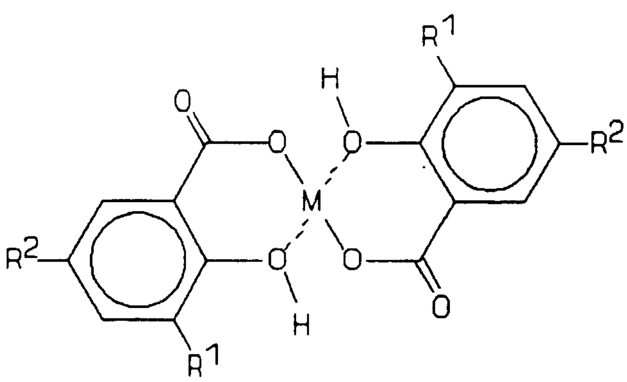 (14)

worin
M ein zweiwertiges Metall-Zentralatom, vorzugsweise ein Zinkatom,
$R^1$ und $R^2$ gleiche oder verschiedene, geradkettige oder verzweigte alkylgruppen mit 1-8, vorzugsweise 3-6 C-Atomen, beispielsweise tert. Butyl, bedeuten.

Derartige Verbindungen sind beschrieben in EP-A-0 162 632, US-A-4 908 225, EP-A-0 393 479, EP-A-0 360

617, EP-A-0 291 930, EP-A-0 280 272, EP-A-0 255 925, EP-A-0 251 326, EP-A-0 180 655, EP-A-0 141 377, US-A-4 939 061, US-A-4 623 606, US-A-4 590 141 und/oder charakterisiert durch die CAS-Nummern 31714-55-3, 104815-18-1, 84179-68-8, 110941-75-8, 32517-36-5, 38833-00-00, 95692-86-7, 85414-43-3, 136709-14-3, 135534-82-6, 135534-81-5, 127800-82-2, 114803-10-0, 114803-08-6.

Beispiele für besonders bevorzugte Metallkomplexverbindungen der obigen Formel 13 sind in der folgenden Tabelle angegeben.

Tabelle

| $R^1$ | $R^2$ | $R^3$ | $R^4$ | M | Z |
|---|---|---|---|---|---|
| Cl | H | H | - | Cr | $H^+$ |
| $NO_2$ | $NO_2$ | $-CONHR^4$ | Phenyl | Cr | $H^+/Na^+/NH_4^+$ |
| Cl | H | $-CONHR^4$ | Phenyl | Fe | $H^+/Na^+/NH_4^+$ |
| Cl | H | $-CONHR^4$ | $-(CH_2)_3-$ $-N^+(CH_3)_3$ | Cr | $Cl^-$ |
| $-SO_2NH_2$ | H | H | - | Co | $H^+/Na^+/NH_4^+$ |

11.

Benzimidazolone wie beschrieben in EP-A-0 347 695, insbesondere solche der Formel 15

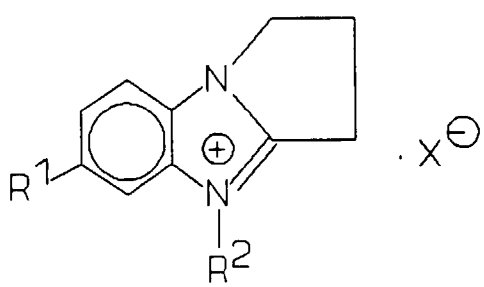

**(15)**

worin

$R^1$ Alkyl mit 1-5 C-Atomen und $R^2$ Alkyl mit 1-12 C-Atomen
und X ein Äquivalent eines Anions, insbesondere ein Chlorid- oder tetrafluoborat-Anion ist (als Beispiel sei genannt die Verbindung mit $R^1 = CH_3$ und $R^2 = C_{11}H_{23}$).

oder Azine der folgenden Colour Index-Nummern: C.I. Solvent Black 5, 5:1, 5:2, 7,31 und 50; C.I. Pigment Black 1, C.I. Basic Red 2 und C.I. Basic Black 1 und 2.

Vorzugsweise enthält der Werkstoff als Ladungssteuermittel eine oder mehrere verschiedene Verbindungen aus folgenden Klassen:
Triphenylmethane der Formel 1; Diallylammoniumverbindungen der Formel 5 und die daraus erhältlichen polymeren Ammoniumverbindungen der Formel 6; Arylsulfide-Derivate der Formel 7; Metallkomplexverbindungen der Formeln 12 und 13.

Besonders bevorzugt sind erfindungsgemäße Elektretfasern, deren Werkstoff als Ladungssteuermittel eine Verbindung der Formel 1 enthält, worin $R^1$ und $R^3$ Phenylamino und $R^2$ 3-Methyl-phenylamino und $X^-$ ein Sulfatäquivalent ist. Diese Verbindung, bekannt als C.I. Solvent Blue 124, entspricht der folgenden Formel 16:

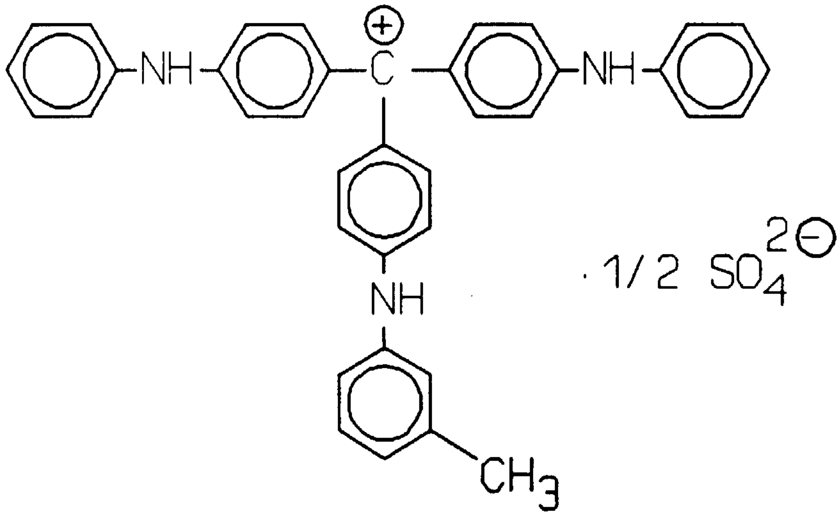

(16)

Besonders bevorzugt sind auch erfindungsgemäße Elektretfasern, deren Werkstoff als Ladungssteuermittel eine Verbindung der Formel 5 oder 6 enthält, worin $R^1$ und $R^2$ Methyl und $X^-$ ein Tetraphenylborat-Anion ist.

Weiterhin sind besonders bevorzugt erfindungsgemäße Elektreffasern deren Werkstoff als Ladungssteuermittel eine Verbindung der Formel 7, worin $R^1$, $R^2$, $R^3$ und $R^4$ Propyl und $R^5$ eine Disulfid-Brücke ist, oder der Formel 13, worin $R^1$ Chlor, $R^2$ Wasserstoff und Z ein Proton ist, enthält.

Die Herstellung der Elektretfasern erfolgt durch Verspinnen eines fadenbildenden Werkstoffs aus der Schmelze oder aus einer Lösung in einem geeigneten Lösemittel, wobei in an sich bekannten Weise nach dem Nassspinn- oder dem Trockenspinnverfahren gearbeitet werden kann, erforderlichenfalls Abkühlung der ersponnenen Filamente, Abziehen mit einer Geschwindigkeit im Bereich von etwa 100 bis 8000 m/min, vorzugsweise von 1000 bis 5000 m/min und daran anschließenden weiteren, üblichen Verfahrensschritten, wie erforderlichenfalls Verstreckung und je nach dem vorgesehenen weiteren Einsatz Wirrablage oder Schnitt zu Stapelfasern, wobei ein Werkstoff versponnen wird, der überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthält.

Alternativ erfolgt die Herstellung der Elektretfasern durch Spalten von spaltbaren multilobalen Fasern, die längs der Faserachse sich erstreckende Segmente aus dem Elektretwerkstoff enthalten oder durch Matrixauflösung eines "Island in the Sea"-Filaments dessen Inselbereiche aus dem Elektretwerkstoff bestehen, oder durch Spalten einer Folie aus dem Elektretwerkstoff, wobei der Elektretwerkstoff überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthält.

Als weitere Alternativen zur Herstellung der Elektretfasern kommen in Betracht das Faser-Blasverfahren, wie es in der Deutschen Patentanmeldung 19 64 060 beschrieben ist oder das "Flash - Spinnen" im elektrostatischen Feld, wie es in der US-Patentschrift 3 319 309 beschrieben ist, jeweils unter Einsatz des erfindungsgemäß einzusetzenden Elektret-Werkstoffs.

Beim Schmelzspinnen wird der Elektret-Werkstoff auf eine Temperatur von etwa 30-50 °C über dem Schmelzpunkt des Polymers erwärmt und die Schmelze in üblicher Weise durch Spinndüsen extrudiert. Die Temperatur der Schmelze wird innerhalb des angegebenen Bereichs so gewählt, daß sich ein optimaler Fluß des Werkstoffs einstellt der bei nicht zu hohem Spinndruck die für die Orientierung der Filamente erforderlichen Scherkräfte aufzubauen gestattet.

Beispielsweise wird ein Werkstoff, der überwiegend aus Polypropylen besteht, bei etwa 260 °C, ein Werkstoff auf Basis Polyester bei ca. 280-310 °C versponnen.

Wird das Polymer aus der Schmelze versponnen, so müssen die aus den Spinnöffnungen abgezogenen Filamente durch Abkühlung verfestigt werden. Die Abkühlung kann in jeder bekannten Weise ausgeführt werden und ermöglicht auch bei der Verarbeitung des Elektretwerkstoffs die gezielte Steuerung der Filamenteigenschaften. So ist z.B eine Verzögerung der Abkühlung durch einen Rechauffeur möglich, wenn Fasern mit einer speziellen Schrumpf/Festigkeitscharakteristik hergestellt werden sollen oder es kann eine scharfe asymmetrische Anblasung erfolgen wenn selbstkräuselnde Fasern hergestellt werden sollen. Insbesondere für die Herstellung feiner Einzeltiter unter 1 dtex empfiehlt sich dagegen eine sog. Zentralanblasung, die eine besonders gleichmäßige und damit spannungsfreie Abkühlung der Filamente gewährleistet.

Das Erspinnen der Elektretfasern aus Lösungen des Werkstoffs in einem geeigneten Lösemittel erfolgt ebenfalls nach gut bekannten Verfahren. Dabei können prinzipiell die gleichen Bedingungen gewählt werden wie bei Normal-Polymeren. Die Verfestigung der aus der Spinndüse austretenden Lösung kann, beim Trockenspinnen, durch Verdampfen des Lösemittels oder, beim Naßspinnen, durch Ausfällung des Werkstoffs in Fadenform in einem Fällbad erfolgen.
Hierbei ergeben sich Vorteile insbesondere hinsichtlich der Werkstoffzusammensetzung. Es können dann nämlich auch solche Werkstoffe eingesetzt werden, die ein Ladungssteuermittel enthalten, welches bei der Schmelztemperatur des Polymermaterials nicht beständig ist.
Bei den genannten Spinnverfahren können außer Spinndüsen mit runden Spinnöffnungen auch solche mit Profilöffnungen eingesetzt werden und es können durch an sich bekannte Spezialanordnungen oder -Gestaltungen der Öffnungen Mehrkomponentenfilamente in Seite an Seite - Anordnung oder vom Kern-Mantel-Typ ersponnen werden.
Spinnabzugsgeschwindigkeiten herab bis zu 100 m/min werden hauptsächlich zur Herstellung von Titern oberhalb 4 dtex benutzt.
Wirtschaftlich interessanter sind Spinnabzugsgeschwindigkeiten zwischen 1000 und 5000 m/min, wobei insbesondere sehr feine Titer bei den höchsten Geschwindigkeiten dieses Bereichs ersponnen werden.
Die Herstellung des zu verspinnenden Werkstoffs geschieht durch homogenes Einarbeiten der Ladungssteuermittel in das Polymermaterial aus dem der Werkstoff überwiegend besteht.
Besonders vorteilhaft ist es dabei, das Ladungssteuermittel in Form eines Masterbatch einzusetzen.
Die ersponnenen Filamente werden in der Regel einer Verstreckung unterworfen, deren Ausmaß einerseits von der Spinnorientierung der Filamente, andererseits von den gewünschten Festigkeits und Dehnbarkeitseigenschaften bestimmt wird. Während Filamente die bei Spinngeschwindigkeiten unter 1000 m/min erhalten wurden einer kräftigen Verstreckung bedürfen, wenn sie zu textilen Garnen oder Flächengebilden verarbeitet werden sollen, nimmt das Ausmaß der erforderlichen Verstreckung mit steigender Spinngeschwindigkeit stetig ab, da diese Filamente schon eine relativ hohe Spinnorientierung aufweisen.
Feinsttiter, die bei den höchsten Geschwindigkeiten dieses Bereichs ersponnen werden, stellen daher vollorientierte Filamente (so. FOY) dar und bedürfen keiner Nachverstreckung.
Sollen hochfeste Filamente hergestellt werden, so ist eine Verstreckung bis auf eine Reißdehnung von ca. 10 % und darunter üblich, für besonders dehnbare Filamente, z.B. zur Herstellung von tiefziehfähigen Flächengebilden, ist die Verstreckung nur gering und wird so bemessen, daß sich Reißdehnungen von bis zu 200 % ergeben. Die Filamente können der Verstreckung entweder in Form von Multifilamentgarnen oder in Form von Kabeln unterworfen werden.
Die zur Verstreckung erforderliche Fadenspannung kann durch Galetten oder aber durch Verstreckdüsen oder Streckschächte erzeugt werden. Während Galetten die Filamente bzw. Garne durch Reibung an der drehenden Galettenoberfläche mitziehen, werden in Verstreckdüsen oder Streckschächten die Filamente durch einen starken Luftstrom mitgerissen.
Eine besondere Bedeutung kommt den Streckschächten bei der Wirrablage von Filamentmaterial zur Herstellung von Wirrvliesen, insbesondere von "Spunbonds" zu.
Die Verstreckung kann bei Raumtemperatur oder bei erhöhter Temperatur, insbesondere oberhalb des Glasübergangspunktes
ausgeführt werden. Eine sog. Kaltverstreckung führt in der Regel zu speziellen hochschrumpfenden Filamenten, die Heißverstreckung führt zu Filamenten, die übliche textiltechnisch zweckmäßige Schrumpfwerte von 0 bis 10 % aufweisen.
Die Verstreckung der Filamentmaterialien kann in bekannte Weise ein oder mehrstufig erfolgen.
Die Elektretfasern können auch mit allen bekannten Texturierungen versehen werden. So ist es möglich, die Filamente, vorzugsweise in Kabelform, einer Stauchkammerkräuselung zu unterwerfen.
Auch die bereits oben erwähnten Seite-an-Seite Bikomponentenfasern mit einem Elektretanteil können bei Wahl einer Komponente mit einer von dem Elektretmaterial unterschiedlichen Schrumpfcharakteristik durch Auslösung des Schrumpfs gekräuselt werden.
Die folgenden Ausführungsbeispiele veranschaulichen die Ausführung der vorliegenden Erfindung.

Beispiel A1

Herstellung von Polyester-Elektretfasern

Polyethylenterephthalat-Faserrohstoff wurde erfindungsgemäß modifiziert durch Vermischen mit soviel des Ladungssteuermittels der Formel 16 (C.I. Solvent Blue 124) in Form eines Masterbatches, daß die Konzentration des Solvent Blue 124 in der Spinnware 1,0 Gew.-% betrug. Dabei wurde das Masterbatch aus der hochkristallinen Form

des Ladungssteuermittels hergestellt, deren Röntgendiagramm (Cu-K-alpha-Strahlung) einen starken Reflex bei 2 δ° = 18,47, drei mittelstarke Reflexe bei 2 δ° = 6,97; 12,1 und 13,9 und schwache breite Reflexe bei 2 δ° = 20,0; 21,7; 22,5; 24,8; 28,2; 30,7 und 32,2 aufweist.

Der so hergestellte Werkstoff wurde nach konventioneller Schmelzspinntechnologie versponnen. Die Spinntemperatur betrug 280 °C, die Spinnabzugsgeschwindigkeit lag bei 1500 m/min.

Die produzierte Spinnware wurde nach ebenfalls konventioneller Bandstraßentechnologie (Stauchkammerkräuselung, Fixierung und Schnitt) zu wollähnlichen, erfindungsgemäß modifizierten Stapelfasern mit einem Einzeltiter von 1,3 dtex verarbeitet.

<u>Beispiel A2</u>

Herstellung normaler Polyesterfasern

Der in Beispiel A1 eingesetzte Polyester-Faserrohstoff, dem jedoch kein Ladungssteuermittel zugesetzt worden war, wurde, genau wie in Beispiel A1, nach konventioneller Schmelzspinntechnologie versponnen. Die Spinntemperatur betrug 305°C, die Spinnabzugsgeschwindigkeit lag bei 1500 m/min.

Die produzierte Spinnware wurde nach ebenfalls konventioneller Bandstraßentechnologie (Stauchkammerkräuselung, Fixierung und Schnitt) zu wollähnlichen, erfindungsgemäß modifizierten Stapelfasern mit einem Einzeltiter von 1,3 dtex verarbeitet.

<u>Beispiel B1</u>

Herstellung von Hochmodul-Aramid (HMA)-Elektretfasern.

Hochmodul-Aramid-Faserrohstoff wurde erfindungsgemäß modifiziert durch Vermischen mit soviel des Ladungssteuermittels der Formel 6, worin $R^1$ und $R^2$ Methylgruppen sind (Handelsprodukt (R)Copy Charge NX VP 434), daß die Konzentration des Copy Charge in der Spinnware 1,0 Gew.-% betrug.
Der so hergestellte Werkstoff wurde nach konventioneller Technologie, unter Einsatz von N-Methylpyrrolidon (NMP) als Polymer-Lösungsmittel und jedoch ohne Auftrag einer Präparation, versponnen. Die Spinnschacht-Temperatur betrug 135°C.

Die produzierte Spinnware wurde zu erfindungsgemäß modifizierten Stapelfasern mit einem Einzeltiter von 1,8 dtex verarbeitet.

<u>Beispiel B2</u>

Herstellung von Hochmodul-Aramid-Normalfasern.

Der in Beispiel B1 eingesetzte Hochmodul-Aramid-Faserrohstoff, dem jedoch kein Ladungssteuermittel zugesetzt worden war, wurde, genau wie in Beispiel B1, nach konventioneller Technologie, jedoch ohne Auftrag einer Präparation, versponnen.

Die produzierte Spinnware wurde wie in Beispiel B1 zu erfindungsgemäß modifizierten Stapelfasern mit einem Einzeltiter von 1,8 dtex verarbeitet.

<u>Vliesstoffherstellung</u>

Aus den in den Beispielen A1, A2, B1 und B2 hergestellten Stapelfasern sowie aus Mischungen dieser Fasern und jeweils 20 Gew.-% Bindefasern (Typ: Bikomponentenfaser Polyester/Co-polyester in Kern/Mantelaufbau mit einem Mantelschmelzpunkt von 110 °C, Titer 3,0 dtex, Stapellänge 50 mm; (R)TREVIRA 252) in den unten angegebenen Zusammensetzungen wurden auf einer Versuchskrempel Vliese mit einem Flächengewicht von 200 g/$m^2$ hergestellt. Die Vliesverfestigung erfolgte thermisch bei 160 °C und einer Verweilzeit von 3 Minuten.

Vliesstoff-Muster 1:

m = 200 g/$m^2$ ;
40 Gew.-% PES-Normalfasern A2,
40 Gew.-% HMA-Normalfasern B2,
20 Gew.-% Bikomponenten-Bindefasern

Vliesstoff-Muster 2 (erfindungsgemäß):

$m = 200\ g/m^2$ ;
40 Gew.-% PES-Elektretfasern A1,
40 Gew.-% HMA-Elektretfasern B1,
20 Gew.-% Bikomponenten-Bindefasern

Vliesstoff-Muster 3:

$m = 200\ g/m^2$ ;
80 Gew.-% HMA-Normalfasern B2,
20 Gew.-% Bikomponenten-Bindefasern

Vliesstoff-Muster 4:

$m = 200\ g/m^2$ ;
80 Gew.-% HMA-Elektretfasern B1,
20 Gew.-% Bikomponenten-Bindefasern

Vliesstoff-Muster 5:

$m = 200\ g/m^2$ ;
80 Gew.-% PES-Normalfasern A2,
20 Gew.-% Bikomponenten-Bindefasern

Vliesstoff-Muster 6:

$m = 200\ g/m^2$ ;
80 Gew.-% PES-Elektretfasern A1,
20 Gew.-% Bikomponenten-Bindefasern

Die Absscheideleistung der hergestellten Vliese wurden in einem konventionellen Filterprüfstand, der nach dem Prinzip der Streulichtmessung arbeitet, geprüft.
Dabei wurden folgende Prüfparameter eingestellt:

Anströmgeschwindigkeit: 20 cm/s,
Partikelmassenkonzentration: 50 $mg/m^3$,
Bestaubungszeit: variiert von 1 bis 10 Minuten,
Teststaub: "ac fine" mit folgender Zusammensetzung:

| Partikelgröße | Teilchen-Anteil [%] |
|---|---|
| 0,3 - 0,5 µm | 55,5 |
| 0,5 - 1,0 µm | 17,3 |
| 1,0 - 3,0 µm | 26,6 |
| 3,0 - 5,0 µm | 0,5 |
| > 5,0 µm | nicht relevant |

Die mit diesen Vliesmustern erzielten Abscheideleistungen sind den folgenden Tabellen zu entnehmen:

Tabelle 1

| Trenngrade T(x) des Vliesstoffmusters 1 als Funktion der Bestaubungszeiten t von 1 bis 10 Minuten; Druckdifferenz: 30 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,94 | 0,94 | 0,93 | 0,93 | 0,93 | 0,92 | 0,92 | 0,92 | 0,92 | 0,91 |
| 0,5 | 0,96 | 0,96 | 0,95 | 0,95 | 0,94 | 0,94 | 0,94 | 0,94 | 0,94 | 0,94 |
| 1,0 | 0,97 | 0,97 | 0,97 | 0,97 | 0,97 | 0,96 | 0,96 | 0,95 | 0,95 | 0,95 |
| 3,0 | 0,99 | 0,99 | 0,99 | 0,99 | 0,99 | 0,99 | 0,99 | 0,99 | 0,99 | 0,99 |
| 5,0 | 0,99 | 0,99 | 0,99 | 0,99 | 1,00 | 0,99 | 0,99 | 0,99 | 0,99 | 0,99 |

Tabelle 2

| Trenngrade T(x) des Vliesstoffmusters 2 als Funktion der Bestaubungszeiten t von 1 bis 10 Minuten; Druckdifferenz: 31 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,98 | 0,98 | 0,98 | 0,98 | 0,98 | 0,98 | 0,98 | 0,97 | 0,97 | 0,97 |
| 0,5 | 0,99 | 0,99 | 0,99 | 0,99 | 0,99 | 0,98 | 0,98 | 0,98 | 0,98 | 0,98 |
| 1,0 | 1,00 | 1,00 | 0,99 | 0,99 | 0,99 | 0,99 | 0,99 | 0,99 | 0,99 | 0,99 |
| 3,0 | 1,00 | 1,00 | 1,00 | 1,00 | 1,00 | 1,00 | 1,00 | 1,00 | 1,00 | 1,00 |
| 5,0 | 1,00 | 1,00 | 1,00 | 1,00 | 1,00 | 1,00 | 1,00 | 1,00 | 1,00 | 1,00 |

Tabelle 3

| Trenngrade T(x) des Vliesstoffmusters 3 als Funktion der Bestaubungszeiten t von 1 bis 10 Minuten; Druckdifferenz: 30 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,91 | 0,91 | 0,90 | 0,89 | 0,88 | 0,88 | 0,87 | 0,87 | 0,86 | 0,86 |
| 0,5 | 0,94 | 0,94 | 0,93 | 0,92 | 0,92 | 0,91 | 0,91 | 0,91 | 0,90 | 0,90 |
| 1,0 | 0,95 | 0,95 | 0,95 | 0,94 | 0,94 | 0,94 | 0,93 | 0,93 | 0,93 | 0,93 |
| 3,0 | 0,98 | 0,99 | 0,98 | 0,98 | 0,98 | 0,98 | 0,98 | 0,98 | 0,98 | 0,98 |
| 5,0 | 1,00 | 1,00 | 1,00 | 1,00 | 1,00 | 0,99 | 1,00 | 1,00 | 1,00 | 1,00 |

Tabelle 4

| Trenngrade T(x) des Vliesstoffmusters 4 als Funktion der Bestaubungszeiten t von 1 bis 10 Minuten; Druckdifferenz: 31 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,98 | 0,98 | 0,98 | 0,98 | 0,98 | 0,98 | 0,98 | 0,98 | 0,97 | 0,97 |
| 0,5 | 0,99 | 0,99 | 0,99 | 0,99 | 0,98 | 0,98 | 0,98 | 0,98 | 0,98 | 0,98 |
| 1,0 | 0,99 | 0,99 | 0,99 | 0,99 | 0,99 | 0,99 | 0,99 | 0,99 | 0,99 | 0,99 |
| 3,0 | 1,00 | 1,00 | 1,00 | 1,00 | 1,00 | 1,00 | 1,00 | 1,00 | 1,00 | 1,00 |
| 5,0 | 1,00 | 1,00 | 1,00 | 1,00 | 1,00 | 1,00 | 1,00 | 1,00 | 1,00 | 1,00 |

Tabelle 5

| Trenngrade T(x) des Vliesstoffmusters 5 als Funktion der Bestaubungszeiten t von 1 bis 10 Minuten; Druckdifferenz: 34 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,95 | 0,95 | 0,94 | 0,93 | 0,93 | 0.92 | 0,91 | 0,91 | 0,91 | 0,91 |
| 0,5 | 0,96 | 0,96 | 0,96 | 0,96 | 0,95 | 0,95 | 0,94 | 0,94 | 0,94 | 0,93 |
| 1,0 | 0,98 | 0,97 | 0,97 | 0,97 | 0,97 | 0,96 | 0,96 | 0,96 | 0,96 | 0,96 |
| 3,0 | 0,99 | 0,99 | 0,99 | 0,99 | 1,00 | 0,99 | 0,99 | 0,99 | 0,99 | 0,99 |
| 5,0 | 1,00 | 1,00 | 1,00 | 0,98 | 1,00 | 1,00 | 1,00 | 1,00 | 1,00 | 1,00 |

Tabelle 6

| Trenngrade T(x) des Vliesstoffmusters 6 als Funktion der Bestaubungszeiten t von 1 bis 10 Minuten; Druckdifferenz: 36 Pa. | | | | | | | | | | |
|---|---|---|---|---|---|---|---|---|---|---|
| Partikelgröße [µm] | Trenngrad T(x) des Vliesstoff-Filters nach einer Bestaubungszeit von 1 bis 10 Minuten | | | | | | | | | |
| | 1 | 2 | 3 | 4 | 5 | 6 | 7 | 8 | 9 | 10 |
| 0,3 | 0,96 | 0,96 | 0,96 | 0,96 | 0,96 | 0,96 | 0,95 | 0,96 | 0,96 | 0,95 |
| 0,5 | 0,98 | 0,98 | 0,97 | 0,97 | 0,97 | 0,97 | 0,97 | 0,97 | 0,97 | 0,97 |
| 1,0 | 0,98 | 0,98 | 0,98 | 0,98 | 0,98 | 0,98 | 0,98 | 0,98 | 0,98 | 0,98 |
| 3,0 | 0,99 | 1,00 | 1,00 | 1,00 | 1,00 | 1,00 | 1,00 | 1,00 | 1,00 | 1,00 |
| 5,0 | 0,98 | 1,00 | 1,00 | 1,00 | 1,00 | 1,00 | 1,00 | 1,00 | 1,00 | 1,00 |

Die in den Tabellen wiedergegebenen Meßergebnisse zeigen (Vergleich der Tabellen 3 /4 und 5/6), daß als Staubfilter eingesetzte Vliesstoffe aus HMA-Fasern oder Polyester-Fasern, die mit einem Ladungssteuermittel ((R) COPY CHARGE NX VP 434 bzw. (R)COPY BLUE 124) modifiziert wurden, jeweils einen deutlich besseren Trenngrad (Abscheideleistung) zeigen als die aus den unmodifizierten Fasern hergestellten Vliesstoffe.
Die durch die Modifizierung erreichte Verbesserung des Trenngrades ist bei den HMA-Fasern deutlich größer als bei den Polyesterfasern.

Dies zeigt, daß sich durch erfindungsgemäße Mischung von HMA- und Polyester-Elektretfasern der Trenngrad eines Vliesstoffes erheblich über den Trenngrad eines Vliesstoffes aus Polyester-Elektretfasern anheben läßt. Damit ist es möglich, in Vliesstoffen einen erheblichen Anteil der HMA-Elektretfasern durch preisgünstige Polyester-Elektretfasern zu ersetzen, ohne Einbußen im Trenngrad des Vliesstoffes hinnehmen zu müssen.

**Patentansprüche**

1. Vliesstoff aus Elektreffasern mit verbesserter Ladungsstabilität, bestehend aus Werkstoffen, die überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthalten, dadurch gekennzeichnet, daß der Vliesstoff mindestens zwei Sorten von Elektretfasern enthält, die aus unterschiedlichen Werkstoffen bestehen.

2. Vliesstoff aus Elektretfasern gemäß Anspruch 1, dadurch gekennzeichnet, daß der Vliesstoff zwei oder drei Sorten von Elektretfasern enthält, die aus unterschiedlichen Werkstoffen bestehen.

3. Vliesstoff aus Elektretfasern gemäß mindestens einem der Ansprüche 1 und 2, dadurch gekennzeichnet, daß der Vliesstoff zwei Sorten von Elektretfasern enthält, die aus unterschiedlichen Werkstoffen bestehen.

4. Vliesstoff aus Elektretfasern gemäß mindestens einem der Ansprüche 1 bis 3, dadurch gekennzeichnet, daß die unterschiedlichen Werkstoffe unterschiedliche fadenbildende Polymerisate oder Polykondensate enthalten.

5. Vliesstoff aus Elektretfasern gemäß mindestens einem der Ansprüche 1 bis 4, dadurch gekennzeichnet, daß die unterschiedlichen Werkstoffe unterschiedliche fadenbildende Polymerisate oder Polykondensate enthalten, die sich bezüglich ihrer Dielektrizitätszahl unterscheiden.

6. Vliesstoff aus Elektretfasern gemäß mindestens einem der Ansprüche 1 bis 5, dadurch gekennzeichnet, daß die unterschiedlichen Werkstoffe unterschiedliche Polymerisate oder Polykondensate enthalten, die ausgewählt sind aus der Gruppe der Polyolefine, der halogenierten Polyolefine, der Polyacrylate, Polyacrylnitril, Polystyrol und Fluorpolymeren oder aus der Gruppe der Polyester, Polycarbonate, aliphatischen oder aromatischen Polyamide, Polyimide, Polyetherketone (z.B. PEK und PEEK), Polyarylensulfide insbesondere Polyphenylensulfid, Polyacetale und Zelluloseester.

7. Vliesstoff aus Elektretfasern gemäß mindestens einem der Ansprüche 1 bis 6, dadurch gekennzeichnet, daß die unterschiedlichen Werkstoffe unterschiedliche fadenbildende Polymerisate oder Polykondensate und unterschiedliche organische oder metallorganische Ladungssteuermittel enthalten.

8. Vliesstoff aus Elektretfasern gemäß mindestens einem der Ansprüche 1 bis 7, dadurch gekennzeichnet, daß die unterschiedlichen Werkstoffe unterschiedliche organische oder metallorganische Ladungssteuermittel enthalten, die ausgewählt sind aus der Gruppe der Triphenylmethane; Ammonium- und Immoniumverbindungen; fluorierte Ammonium- und Immoniumverbindungen; biskationische Säureamide; polymere Ammoniumverbindungen; Diallylammoniumverbindungen; Arylsulfide-Derivate; Phenolderivate; Phosphoniumverbindungen und fluorierte Phosphoniumverbindungen; Calix(n)arene; Metallkomplexverbindungen; Benzimidazolone; oder Azine, Thiazine oder Oxazine, die im Colour Index als Pigments, Solvent Dyes, Basic Dyes oder Acid Dyes aufgeführt sind.

9. Vliesstoff aus Elektretfasern gemäß mindestens einem der Ansprüche 1 bis 8, dadurch gekennzeichnet, daß der Vliesstoff verfestigt ist.

10. Vliesstoff aus Elektretfasern gemäß mindestens einem der Ansprüche 1 bis 9, dadurch gekennzeichnet, daß der Vliesstoff mechanisch verfestigt ist.

11. Vliesstoff aus Elektretfasern gemäß mindestens einem der Ansprüche 1 bis 10, dadurch gekennzeichnet, daß der Vliesstoff durch einen chemischen Binder verfestigt ist.

12. Vliesstoff aus Elektretfasern gemäß mindestens einem der Ansprüche 1 bis 11, dadurch gekennzeichnet, daß der Vliesstoff durch einen Schmelzbinder verfestigt ist.

13. Staubfilter bestehend aus oder enthaltend einen Vliesstoff des Anspruchs 1.

14. Staubwischtuch bestehend aus oder enthaltend einen Vliesstoff des Anspruchs 1.

**15.** Verwendung des Vliesstoffes nach Anspruch 1 als Staubfilter, insbesondere als Feinstaubfilter.

**16.** Verwendung des Vliesstoffes nach Anspruch 1 als Staubwischtuch.

**Claims**

**1.** A non-woven material of electret fibres with an improved charge stability, consisting of materials which predominantly contain a thread-forming polymer or polycondensate and 0.01 to 30% by weight (preferably 0.01 to 10 and in particular 0.1 to 5% by weight) related to the weight of the material, of organic or metallorganic charge control agents, characterised in that the non-woven material contains at least two kinds of electret fibres which consist of different materials.

**2.** A non-woven material of electret fibres according to claim 1, characterised in that the non-woven material contains two or three kinds of electret fibres which consist of different materials.

**3.** A non-woven material of electret fibres according to at least one of claims 1 and 2, characterised in that the non-woven material contains two kinds of electret fibres which consist of different materials.

**4.** A non-woven material of electret fibres according to at least one of claims 1 to 3, characterised in that the different materials contain different thread-forming polymers or polycondensates.

**5.** A non-woven material of electret fibres according to at least one of claims 1 to 4, characterised in that the different materials contain different thread-forming polymers of polycondensates which differ in respect of their dielectric number.

**6.** Anon-woven material of electret fibres according to at least one of claims 1 to 5, characterised in that the different materials contain different polymers or polycondensates which are selected from the group of polyolefins, halogenated polyolefins, polyacrylates, polyacrylonitrile, polystyrene and fluoropolymers or from the group of polyesters, polycarbonates, aliphatic or aromatic polyamides, polyimides, polyether ketones (e.g. PEK and PEEK), polyarylene sulphides, particularly polyphenylene sulphide, polyacetyls and cellose esters.

**7.** A non-woven material of electret fibres according to at least one of claims 1 to 6, characterised in that the different materials contain different thread-forming polymers or polycondensates and different organic or metallorganic charge control agents.

**8.** A non-woven material of electret fibres according to at least one of claims 1 to 7, characterised in that the different materials contain different organic or metallorganic charge control agents which are selected from the group of triphenyl methanes, ammonium and immonium compounds, fluorinated ammonium and immonium compounds, bicationic acid amides, polymeric ammonium compounds, diallyl ammonium compounds, aryl sulphide derivatives, phenol derivatives, phosphonium compounds and fluorinated phosphonium compounds, calix(n) arenes, metal complex compounds, benzimidazolones or azines, thiazines or oxazines, listed in the Colour Index as pigments, solvent dyes, basic dyes or acid dyes.

**9.** A non-woven material of electret fibres according to at least one of claims 1 to 8, characterised in that the non-woven material is solidified.

**10.** A non-woven material of electret fibres according to at least one of claims 1 to 9, characterised in that the non-woven material is mechanically solidified.

**11.** A non-woven material of electret fibres according to at least one of claims 1 to 10, characterised in that the non-woven material is solidified by a chemical binder.

**12.** A non-woven material of electret fibres according to at least one of claims 1 to 11, characterised in that the non-woven material is solidified by a melting binder.

**13.** A dust filter consisting of or containing a non-woven material according to claim 1.

14. A duster consisting of or containing a non-woven material according to claim 1.

15. Use of the non-woven material according to claim 1 as a dust filter and particularly as a fine dust filter.

16. Use of the non-woven material according to claim 1 as a duster.

## Revendications

1. Etoffe de nappe de fibres à base de fibres à électret manifestant une meilleure stabilité de la charge, constituée par des matériaux qui contiennent principalement un polymère ou un condensat filmogène et, à concurrence de 0,01 à 30% en poids (de préférence à concurrence de 0,01 à 10, en particulier de 0,1 à 5% en poids), rapportés au poids du matériau, des agents de réglage de la charge de type organique ou de type organométallique, caractérisée en ce que l'étoffe de nappe de fibres contient au moins deux sortes de fibres à électret qui sont constituées par des matériaux différents.

2. Etoffe de nappe de fibres à base de fibres à électret selon la revendication 1, caractérisée en ce que l'étoffe de nappe de fibres contient deux ou trois sortes de fibres à électret qui sont constituées par des matériaux différents.

3. Etoffe de nappe de fibres à base de fibres à électret selon au moins l'une quelconque des revendications 1 et 2, caractérisée en ce que l'étoffe de nappe de fibres contient deux sortes de fibres à électret qui sont constituées par des matériaux différents.

4. Etoffe de nappe de fibres à base de fibres à électret selon au moins l'une quelconque des revendications 1 à 3, caractérisée en ce que les matériaux différents contiennent des polymères ou des polycondensats filmogènes différents.

5. Etoffe de nappe de fibres à base de fibres à électret selon au moins l'une quelconque des revendications 1 à 4, caractérisée en ce que les matériaux différents contiennent des polymères ou des polycondensats filmogènes différents qui se distinguent par rapport à leur constante diélectrique.

6. Etoffe de nappe de fibres à base de fibres à électret selon au moins l'une quelconque des revendications 1 à 5, caractérisée en ce que les matériaux différents contiennent des polymères ou des polycondensats différents qui sont sélectionnés parmi le groupe comprenant des polyoléfines, des polyoléfines halogénées, des polyacrylates, le polyacrylonitrile, le polystyrène et des polymères fluorés, ou encore parmi le groupe comprenant des polyesters, des polycarbonates, des polyamides aliphatiques ou aromatiques, des polyimides, des polyéthercétones (par exemple PEK et PEEK), des polyarylènesulfures, en particulier le polyphénylènesulfure, des polyacétals et des esters cellulosiques.

7. Etoffe de nappe de fibres à base de fibres à électret selon au moins l'une quelconque des revendications 1 à 6, caractérisée en ce que les matériaux différents contiennent des polymères ou des polycondensats filmogènes différents et des agents différents de réglage de la charge de type organique ou organométallique.

8. Etoffe de nappe de fibres à base de fibres à électret selon au moins l'une quelconque des revendications 1 à 7, caractérisée en ce que les matériaux différents contiennent des agents différents de réglage de la charge de type organique ou organométallique qui sont choisis parmi le groupe comprenant les triphénylméthanes; des composés d'ammonium et d'immonium; des composés d'ammonium et d'immonium fluorés; des amides d'acides bicationiques; des composés d'ammonium polymères; des composés de diallylammonium; des dérivés d'arylsulfures; des dérivés du phénol; des composés de phosphonium et des composés de phosphonium fluorés; des calix(n)arènes; des composés de complexes de métaux; des benzimidazolones; ou encore des azines, des thiazines ou des oxazines qui sont reprises dans le Colour Index par les termes Pigments, Solvent Dyes, Basic Dyes ou Acid Dyes.

9. Etoffe de nappe de fibres à base de fibres à électret selon au moins l'une quelconque des revendications 1 à 8, caractérisée en ce que l'étoffe de nappe de fibres est renforcée.

10. Etoffe de nappe de fibres à base de fibres à électret selon au moins l'une quelconque des revendications 1 à 9, caractérisée en ce que l'étoffe de nappe de fibres est renforcée par voie mécanique.

**11.** Etoffe de nappe de fibres à base de fibres à électret selon au moins l'une quelconque des revendications 1 à 10, caractérisée en ce que l'étoffe de nappe de fibres est renforcée à l'aide d'un liant chimique.

**12.** Etoffe de nappe de fibres à base de fibres à électret selon au moins l'une quelconque des revendications 1 à 11, caractérisée en ce que le étoffe de nappe de fibres est renforcée via un liant thermofusible.

**13.** Filtre antipoussière constitué par ou contenant une étoffe de nappe de fibres selon la revendication 1.

**14.** Chiffon à poussière constitué par ou contenant une étoffe de nappe de fibres selon la revendication 1.

**15.** Utilisation de l'étoffe de nappe de fibres selon la revendication 1 à titre de filtre antipoussière, en particulier à titre de filtre retenant des fines poussières.

**16.** Utilisation de l'étoffe de nappe de fibres selon la revendication 1 à titre de chiffon à poussière.